# EUROPÄISCHE PATENTSCHRIFT

(11) **EP 4 614 434 B1**
(45) Veröffentlichungstag und Bekanntmachung des Hinweises auf die Patenterteilung: **15.07.2026**
(21) Anmeldenummer: 25158906.5
(22) Anmeldetag: 19.02.2025
(51) Int. Cl.: G06T 7/00

(54) **VERFAHREN UND VORRICHTUNG ZUM DETEKTIEREN VON FEHLENDEN VERBINDUNGSELEMENTEN IN 3D FAHRZEUGGEOMETRIEDATEN EINES DIGITALEN ZWILLINGS FÜR DEN AUFBAU VON EINEM FAHRZEUG**
METHOD AND DEVICE FOR DETECTING MISSING CONNECTION ELEMENTS IN 3D VEHICLE GEOMETRY DATA OF A DIGITAL TWIN FOR THE CONSTRUCTION OF A VEHICLE
PROCÉDÉ ET DISPOSITIF DE DÉTECTION D'ÉLÉMENTS DE LIAISON MANQUANTS DANS DES DONNÉES GÉOMÉTRIQUES 3D D'UN VÉHICULE D'UN JUMEAU NUMÉRIQUE POUR LA CONSTRUCTION D'UN VÉHICULE

(30) Priorität: 07.03.2024 DE 102024202172
(43) Veröffentlichungstag der Anmeldung: 10.09.2025
(73) Patentinhaber: VOLKSWAGEN AG, 38440 Wolfsburg (DE)
(72) Erfinder: Thiel, Kevin, 38440 Wolfsburg (DE); Peppel, Florian, 38440 Wolfsburg (DE); Deppe, Björn, 38440 Wolfsburg (DE); Lapok, Fabien, 38440 Wolfsburg (DE); Schulz, Sebastian, 38440 Wolfsburg (DE); Müller, Andreas, 38440 Wolfsburg (DE); Tegetmeier, Maximilian, 38440 Wolfsburg (DE); Krey, Christopher, 38440 Wolfsburg (DE); Heuer, Michael, 38440 Wolfsburg (DE); Prohm, Christopher, 38440 Wolfsburg (DE); Becker, Jan, 38440 Wolfsburg (DE)

(56) Entgegenhaltungen:
- CN-A- 112 131 684
- CN-A- 114 035 521
- LI HAO ET AL: "A detection and configuration method for welding completeness in the automotive body-in-white panel based on digital twin", vol. 12, no. 1, 13 May 2022 (2022-05-13), US, XP093277553, ISSN: 2045-2322, Retrieved from the Internet <URL:https://www.nature.com/articles/s41598-022-11440-0> DOI: 10.1038/s41598-022-11440-0

## Beschreibung

Die Erfindung betrifft ein Verfahren und eine Vorrichtung zum Detektieren von fehlenden Verbindungselementen mittels Bilderkennung und Bildbearbeitung in 3D-Fahrzeuggeometriedaten von digitalen Zwillingen für den Aufbau von Fahrzeugen.

In der US 2015/0356209 A1 wird ein geometrisches Modell-System beschrieben, bei welcher ein Benutzer eine CAD-Software verwenden kann, um geometrische Module für mehrere Komponenten zu implementieren. Ein Verbindermodul und ein Paarungsmodul werden beschrieben, um eine erste und ein zweite Komponente zu identifizieren und Verbindungen zu den Komponenten hinzuzufügen, indem passende Paare identifiziert werden.

In der US 2009/0198464 A1 wird ein Verfahren zur Inspektion von Baugruppen offenbart, in welchem ein digitales Bild eines montierten Produktes erhalten wird und ein oder mehrere Objekte aus dem digitalen Bild des montierten Produkts extrahiert werden, wobei jedes der Objekte als ein Bauteil auf der Grundlage seines extrahierten Bildes und einer Bibliothek von Standardkomponenten erkannt wird. Eines oder mehrere Merkmale jedes erkannten Bauteils wird identifiziert und mit Merkmalen eines Standardbauteils verglichen, um einen Montagefehler festzustellen, wenn identifizierte Merkmalen nicht den entsprechenden Standardmerkmalen entsprechen.

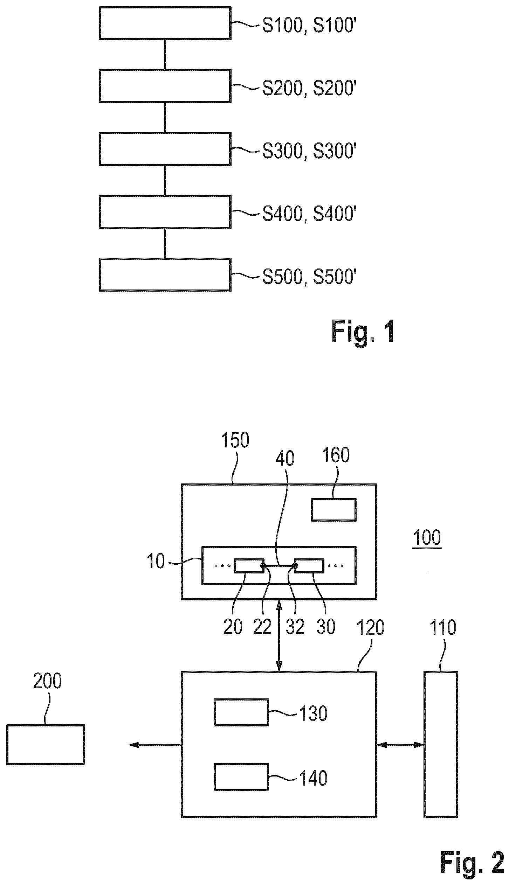

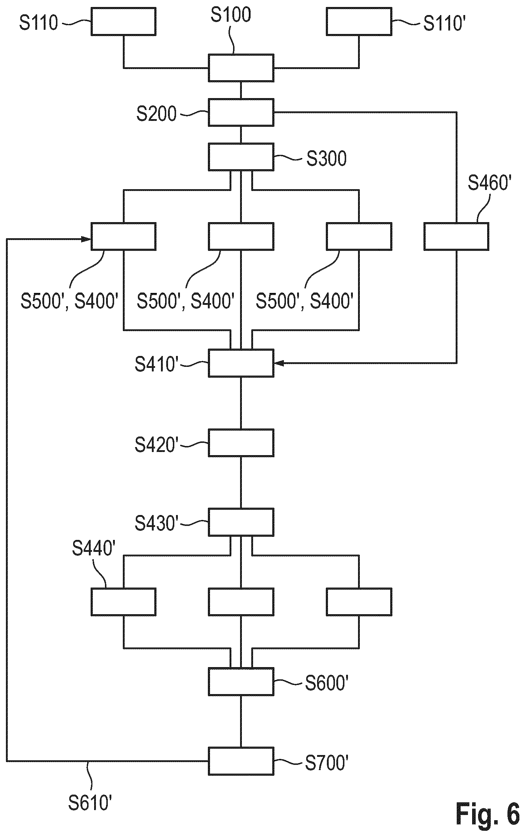

In der Veröffentlichung LI HAO ET AL: "A detection and configuration method for welding completeness in the automotive body-in-white panel based on digital twin", SCIENTIFIC REPORTS, Bd. 12, Nr. 1, 13. Mai 2022 (2022-05-13), XP093277553, US ISSN: 2045-2322, DOI: 10.1038/s41598-022-11440-0, Gefunden im Internet: URL:https://www.nature.com/articles/s41598 -022-11440-0> * Seite 1 -Seite 10; Abbildungen 1,6; Tabelle 1* wird ein Verfahren zur Detektion von fehlenden Verbindungselementen eines realen Panels auf Basis von realen Bildern als Bildeingabe durchgeführt.

Fahrzeuge werden physisch aufgebaut. Für deren Planung und Konstruktion werden mittlerweile fast ausschließlich digitale 3D-Fahrzeuggeometriedaten verwendet. Dabei besteht ein Fahrzeug aus vielen einzelnen Fahrzeugteilen mit Verbindungselementen, die jeweils von einzelnen Gewerken konstruiert und final digital/virtuell in weiteren Schritten zusammengeführt werden. Das Resultat ist ein digitaler Zwilling des geplanten physischen Aufbaus. Auf Basis dieses digitalen Zwillings wird der physische Aufbau erzeugt, gefertigt und zusammengebaut.

Kommt es in dem digitalen Zwilling zu Fehlern, fallen diese spätestens erst im Prozess des physischen Aufbaus auf. Hierbei sind Änderungen jedoch teuer und zeitaufwendig, da Teile falsch konstruiert oder schlicht nicht beschafft/erzeugt wurden und beim Aufbau nicht zur Verfügung stehen. Oder auch in falscher Menge vorliegen (zu wenig, zu viel). Es ist daher wichtig, den digitalen Zwilling so genau und fehlerfrei wie möglich zu haben, um einen korrekten physischen Aufbau ohne Hindernisse zu gewährleisten. Da dessen Erzeugung jedoch verteilt stattfindet, gibt es beliebig viele Punkte an denen es zu Fehlern kommen kann, wie z. B. doppelte, falsche oder vergessene Fahrzeugteile.

In bekannten Lösungen werden die digitalen Geometriedaten des digitalen Zwillings manuell geprüft, indem Experten virtuell durch das virtuelle Fahrzeug "fliegen" und Problemstellen auf Basis ihrer Erfahrung erkennen, lösen oder ggf. einzelne Gewerke kontaktieren und konsultieren. Andernfalls werden Fehler wie fehlende Verbindungselemente erst später festgestellt und korrigiert, d. h., während des physischen Aufbaus der Maschine. Dies ist jedoch entsprechend zeitintensiv sowie teuer und verhindert einen reibungsfreien Ablauf. Zudem sind diese bekannten Lösungen subjektiv und stark auf Erfahrung und Wahrnehmung beruhend. Es kommt daher zu starken Qualitätsschwankungen in der Überprüfung durch fehlende Erfahrung oder fehlende Konzentration. Zudem kann eine Überprüfung nach fehlenden Verbindungelementen lediglich stichprobenartig erfolgen. Darum werden zwangsläufig Problemstellen übersehen.

Jedoch ist es oft nicht möglich im Prozess einzugreifen, da einzelne Gewerke individuelle Arbeitsweisen mit individuellen Anforderungen haben. Zudem treten dort die gleichen Probleme auf, z. B. fehlende Erfahrung, fehlende Konzentration, wozu noch eine ungenaue Abstimmung der Gewerke untereinander zu Problemen führen kann, z. B. Konstrukteur für Fahrzeugteil A glaubt Konstrukteur B plant Verbindungselemente zwischen den Fahrzeugteilen ein, und Konstrukteur B verlässt sich auf Konstrukteur A.

Der Erfindung liegt nun die Aufgabe zugrunde, ein Verfahren zum Detektieren von fehlenden Verbindungselementen in 3D-Fahrzeuggeometriedaten eines digitalen Zwillings zu entwickeln, welches eine hohe Genauigkeit und hohe Effizienz hat, um den Aufbau eines Fahrzeugs zu beschleunigen. Ferner ist ein Anliegen der Erfindung, diesen digitalen Zwilling effizient zu korrigieren, sodass ein Bau des Fahrzeugs ohne unnötige Verzögerungen ausgeführt werden kann.

Der Gegenstand der Erfindung ist durch die beigefügten Ansprüche definiert.

In einer Ausgestaltung der Erfindung ist ein Verfahren gemäß Anspruch 1 vorgesehen.

Weitere bevorzugte Ausgestaltungen der Erfindung ergeben sich aus den übrigen, in den Unteransprüchen genannten Merkmalen.

Die Erfindung hat den Vorteil, dass mittels des trainierten Detektionsmodells durch Bilderkennung automatisch und mit hoher Genauigkeit fehlende Verbindungselemente in einen 3D-digitalen Zwilling detektiert werden können. Durch das Rendern werden die 3D-Fahrzeuggeometriedeometriedaten in 2D-Bilder umgewandelt, sodass das trainierte Detektionsmodell vorteilhaft eine optische Erkennung auf Basis von 2D-Bildern ausführt. Das trainierte Detektionsmodell arbeitet somit lediglich optisch mit 2D-Bildern und die Detektionen werden rückprojiziert, sodass die Position und Lage im 3D-Zwilling mitermittelt werden. Ferner ergibt sich mit dem vorliegenden trainierten Detektionsmodells kein reality gap, da Training und Anwendung in der synthetischen Domäne erfolgen. Die Information aus der Detektion der fehlenden Verbindungselemente wird im Aufbau des Fahrzeugs zu einer Reduktion von Konstruktionszeiten führen.

Ein digitaler Zwilling ist eine digitale 3D-Repräsentation bzw. ein digitales 3D-Modell eines Fahrzeugs, welche aus mehreren Fahrzeugkomponenten besteht. Ein digitaler Zwilling zum Aufbau eines Fahrzeugs soll alle Strukturteile erhalten, welche beim Aufbau benötigt werden. Ein Verbindungselement kann bevorzugt eine Schraube sein, wobei ein Verbindungselement aber auch ein Stopfen, ein Klipps oder Ähnliches sein kann. Eine Verbindungselementgegenstelle ist beispielsweise ein Loch oder eine Gegenstelle eines anderen Verbindungselements. Die Verbindungselementgegenstelle kann auch als Verbindungsstelle bezeichnet werden. Eine Lage im 3D-Raum kann Position und Orientierung umfassen. Die 3D-Geometriedaten können beispielsweise in einem *.jt-Dateiformat abgespeichert sein. Das trainierte Detektionsmodells stellt ein Modell der künstlichen Intelligenz, KI, dar.

In bevorzugter Ausgestaltung der Erfindung ist vorgesehen, dass das Verfahren ein Erzeugen, für ein Fahrzeugteil, eines 2D-Bildes aus einer Raumrichtung je Fahrzeugteil des digitalen Zwillings durch Rendern der digitalen 3D-Fahrzeuggeometriedaten umfasst, wobei das 2D-Bild Verbindungselemente und Verbindungselementgegenstellen aufweist. Ferner umfasst das Detektieren des Fehlens eines Verbindungselements an einer 3D-Lageposition des digitalen Zwillings zum physischen Aufbau des Fahrzeugs, wenn das trainierte Detektionsmodells eine unbesetzte Verbindungselementgegenstelle und deren Position in dem 2D-Bild erkennt. Das Verfahren umfasst ferner das Bestimmen der 3D-Lageposition der erkannten unbesetzten Verbindungselementgegenstelle durch Rückprojektion unter Verwendung der digitalen 3D-Fahrzeuggeometriedaten, der Raumrichtung und der erkannten Position im 2D-Bild. Ferner kann das Verfahren das digitale Zusammenführen von den verschiedenen Fahrzeugteilen des digitalen Zwillings unter Verwendung der digitalen 3D-Fahrzeuggeometriedaten umfassen. Diese Ausführung hat den Vorteil, dass die Erkennung der Verbindungselementgegenstelle in 2D unmittelbar (und zeitgleich) bereits eine Detektion eines fehlenden Verbindungselements entspricht. Das liegt daran, dass diejenigen Verbindungselementgegenstellen mit Verbindungselementen darin nicht erkannt werden (können). Somit werden nur diejenigen Verbindungselementgegenstellen erkannt, welche ein Fehlen eines Verbindungselements indizieren. Dadurch wird die Performanz und Fehlerrate der Detektion erhöht.

In einer bevorzugten Ausgestaltung der Erfindung ist das Erzeugen, für ein Fahrzeugteil, eines 2D-Bildes aus einer Raumrichtung je Fahrzeugteil des digitalen Zwillings durch Rendern der digitalen 3D-Fahrzeuggeometriedaten unter Entfernung von Verbindungselementen vorgesehen. Das Verfahren umfasst ferner das Erkennen, für jedes Fahrzeugteil, unter Verwendung des trainierten Detektionsmodells zum Erkennen von unbesetzten Verbindungselementgegenstellen auf Basis von 2D-Bildern, mindestens einer unbesetzten Verbindungselementgegenstelle und deren Position in dem erzeugten 2D-Bild. Ferner umfasst das Verfahren das Bestimmen der 3D-Lageposition der mindestens einen erkannten unbesetzten Verbindungselementgegenstelle durch Rückprojektion unter Verwendung der digitalen 3D-Fahrzeuggeometriedaten, der erkannten Position im 2D-Bild und der Raumrichtung. Das Verfahren umfasst ferner das digitale Zusammenführen von den verschiedenen Fahrzeugteilen des digitalen Zwillings unter Verwendung der digitalen 3D-Fahrzeuggeometriedaten. Ferner umfasst das Verfahren das Detektieren des Fehlens eines Verbindungselements an der Verbindungselementgegenstelle auf Basis eines Schnittabgleichs mit einem digitalen Prüfkörper an der Verbindungselementgegenstelle. In diesem Fall werden alle Verbindungselementgegenstellen von dem trainierten Detektionsmodell erkannt durch das Entfernen der Verbindungselemente im Renderingprozess. Dadurch ist ein Abgleich im Nachhinein erforderlich, um zu testen, ob die Verbindungselementgegenstelle tatsächlich besetzt ist, was mit einem Schnittabgleich mit einem digitalen Prüfkörper im digitalen Zwilling bzw. den 3D-Fahrzeuggeometriedaten erfolgen kann. Wenn kein Schnitt erkannt wird, ist das fehlende Verbindungselement detektiert.

In einer bevorzugten Ausgestaltung der Erfindung kann das digitale Zusammenführen von verschiedenen Fahrzeugteilen auf Basis der 3D-Lageposition der mindestens einen erkannten unbesetzten Verbindungselementgegenstelle durch Paaren bzw. Paarbildung von unbesetzten Verbindungselementgegenstelle verschiedener Fahrzeugteile erfolgen. Dies kann auch durch Fitten einer Distanz-abbildenden oder räumlich beschreibenden Struktur mit allen Zentralpunkten erfolgen. Jeder Zentralpunkt existiert nur einmal pro Fahrzeugteil. Durch Paarbildung mittels der 3D-Lagepositionen kann Rückschluss auf zusammengehörende Fahrzeugteile gezogen werden. In bevorzugten Ausführungen kann weiterhin Ähnlichkeit in geometrische Information wie beispielsweise Übereinstimmen in Lochgrößen verwendet werden. KD-Tree kann verwendet werden. Dabei bekommen dicht beieinanderliegende Zentralpunkte eine gleiche ID, wobei Fahrzeugteile mit gleicher ID eine Verbindung darstellen.

In einer weiteren bevorzugten Ausgestaltung der Erfindung umfasst das Verfahren das Erzeugen von digitalen Hüllkörpern als Beispiel eines digitalen Prüfkörpers, z. B. Bounding-Boxen, von Verbindungselementen der Fahrzeugteile des digitalen Zwillings aus den digitalen 3D-Fahrzeuggeometriedaten. Das Verfahren umfasst ferner das Detektieren des Fehlens eines Verbindungselements an der Verbindungselementgegenstelle auf Basis eines Schnittabgleichs des digitalen Hüllkörpers mit der erkannten Verbindungselementgegenstelle. So kann eine schnelle Schnittkontrolle erfolgen. Die räumliche Lage aller Verbindungsgegenstellen wird geschnitten mit den digitalen Hüllkörpern der Verbindungselemente in 3D. Die Schnittgeometrie kann ermittelt werden. Bei Schnitt ist ein Verbindungselement vorliegend und sonst ein Fehlen eines Verbindungselements detektiert. Diese Methode ist ein schneller und sicherer Test, welcher sichere Detektionen erzeugt. Die digitalen Hüllkörper der Verbindungselemente, z.B. die Bounding-Boxen, können aus der Lage vorhandener und bekannter Verbindungelemente, z.B. aus Listen wie beispielsweise einer Normteileliste und unter Verwendung der 3D-Geometriedaten abgeleitet werden.

In einer weiteren bevorzugten Ausgestaltung umfasst das Verfahren das Erzeugen einer Vielzahl von 2D-Bildern aus verschiedenen Raumrichtungen je Fahrzeugteil aus den digitalen 3D-Fahrzeuggeometriedaten. Ferner umfasst das Verfahren das Eingeben der Vielzahl der 2D-Bilder in das trainierte Detektionsmodell zum Erkennen von unbesetzten Verbindungselementgegenstellen auf Basis von eingegebenen 2D-Bildern. Ferner umfasst das Verfahren das Erkennen, für jedes der 2D-Bilder eines Fahrzeugteiles, von einer Verbindungselementgegenstelle und deren Position im 2D-Bild unter Verwendung des trainierten Detektionsmodells. Das Verfahren umfasst ferner das Bestimmen von 3D-Lagepositionen für jedes der erkannten Verbindungselementgegenstellen für jedes 2D-Bild pro Fahrzeugteil durch Rückprojektion auf Basis der digitalen 3D-Fahrzeuggeometriedaten und der erkannten 2D-Position. Ferner umfasst das Verfahren das Clustern der bestimmten 3D-Lagepositionen und das Ermitteln einer 3D-Lageposition einer erkannten Verbindungselementgegenstelle als Zentralpunkt aus jedem Cluster. Durch diese Methode kann die Genauigkeit der Bestimmung der 3D-Lageposition einer erkannten Verbindungselementgegenstelle erhöht werden. Dadurch wird die Genauigkeit des gesamten Detektionsverfahrens verbessert. Hierbei können gesampelte Punkte durch verschiedene Verfahren (z. B. K-Medoids) um Ausreißer reduziert werden bei der Rückprojektion und weitere Features/Merkmale erhoben werden (z. B. via Ebenenfitting). Die finalen Punkte können geclustert und optional noch einmal gefiltert werden (z. B. via DBSCAN (Density-Based Spatial Clustering of Applications with Noise/ Dichtebasierte räumliche Clusteranalyse mit Rauschen)), wobei auch vorher erhobene Features (z. B. als Gewichte) genutzt werden können.. Beispielsweise können Konfidenzwerte aus den Schätzungsresultaten des trainierten Detektionsmodells zur Bestimmung von Gewichten verwendet werden. Der Konfidenzwert stellt dabei ein Maß für die Sicherheit der Lage der gefundenen Verbindungselementgegenstelle als Teil des Detektionsergebnis dar. Die Konfidenzwerte können dann beim Clustern als weitere Features bzw. als Gewichtung für die finale Ermittlung der Lageposition verwendet werden. Das Ergebnis sind sehr genaue Lagebeschreibungen von potentiellen Verbindungsstellen in 3D je Maschinenteil. Der Zentralpunkt eines Clusters kann beispielsweise euklidisch (d.h. über Abstand) gewichtet werden, z. B. mit Konfidenz.

In einer weiteren bevorzugten Ausgestaltung umfasst das Verfahren ferner das Filtern von 3D-Lagespositionen auf Basis von Konfidenzwerten aus der Schätzung des trainierten Detektionsmodells, wie oben beschreiben, und/oder Abstandsinformation der pro Raumwinkel vorhergesagten 3D-Lagepositionen von Verbindungselementgegenstellen, um Ausreißer zu entfernen. Durch vorheriges Filtern und Entfernern von Outliern kann das Clustern statistisch verbessert werden und somit die Bestimmung der 3D-Lageposition in der Genauigkeit erhöht werden. Als Filter kann beispielsweise DBSCAN verwendet werden.

In einer weiteren bevorzugten Ausgestaltung umfasst das Verfahren das Erzeugen einer 3D-Punktwolke aus den digitalen 3D-Fahrzeuggeometriedaten des digitalen Zwillings. Ferner umfasst das Verfahren das Bestimmen einer 3D-Lageposition der mindestens erkannten Verbindungselementgegenstelle durch Rückprojektion auf Basis der 3D-Punktwolke, der Raumrichtung und der erkannten Position im 2D-Bild. Mit der 3D-Punktwolke kann besonderes effizient dann von einer 2D-Information auf Bildebene auf eine 3D-Information projiziert werden, indem die vorher erzeugten 3D-Punktwolken verwendet werden, um zeitlich performant zu sein. Mittels der 3D-Punktwollke und der erkannten Position im 2D-Bild kann somit schnell auf die 3D-Position zurückprojiziert werden. Insbesondere geschieht das via Sampling der 3D-Punktwolke, z. B. über komplette Abmaße der Bounding-Rectangles (Hüllrechtecke) der entdeckten Verbindungselementgegenstellen im 2D-Bild.

Das Verfahren umfasst ferner das Korrigieren des digitalen Zwillings auf Basis der Detektion eines fehlenden Verbindungselement durch Hinzufügen des fehlenden Verbindungselements an der 3D-Lageposition im digitalen Zwilling und/oder einer Ausgabe von Information über die fehlenden Verbindungselemente auf einem Display. Das Ergebnis ist z. B. eine Meldung an welcher Lage Verbindungselemente fehlen und kann somit genutzt werden, um den digitalen Zwilling zu korrigieren. Diese Information kann z. B. auch in eine Graphenbeschreibung (z. B. Fahrzeuggraph) eingebettet werden. Der Graph kann dabei so beschaffen sein, dass die Kanten die Verbindungsstellen bzw. Verbindungselemente zwischen den Fahrzeugkomponenten (Knoten) darstellen. Dies ermöglicht eine Teilautomatisierung durch manuelle Behebung der erkannten unbesetzten Verbindungselementgegenstellen. Weiterhin ist auch eine Vollautomatisierung denkbar, indem ein Verbindungselement nach seiner Art/Typ bestimmt wird und in den digitalen 3D-Fahrzeugdaten platziert und korrigiert wird.

In einer weiteren bevorzugten Ausgestaltung der Erfindung umfasst das Verfahren das Bestimmen einer Ausrichtung von erkannten gegenüberliegenden Verbindungselementgegenstellen von zusammengeführten verschiedenen Fahrzeugteilen als Vektor zwischen den ermittelten unbesetzten Verbindungselementgegenstellen. Ferner umfasst das Verfahren das Hinzufügen des fehlenden Verbindungselements zum digitalen Zwilling auf Basis der Ausrichtung der Verbindungselementgegenstellen. Die Ausrichtung kann aus der Paarbildung im Prozess des digitalen Zusammenführens von gegenüberliegenden unbekannten Verbindungselementgegenstellen erfolgen. Dadurch kann eine Vollautomatisierung ermöglicht werden, indem ein Verbindungselement, z. B. nach Art bestimmt ist, in den digitalen Maschinendaten platziert und korrigiert wird. Alternativ kann eine zwischengeschaltete Nutzerkontrolle erfolgen.

In einer weiteren bevorzugten Ausgestaltung der Erfindung umfasst das Verfahren das Ausgeben eines Steuerbefehls an einen Roboter bzw. an die Aktorik, um den Roboter bzw. die Aktorik auf Basis des korrigierten digitalen Zwillings oder des Zwillings mit Informationen über die fehlenden Verbindungselemente an den erkannten, unbesetzten Verbindungselementgegenstellen zum Aufbau des Fahrzeugs zu steuern. Z. B. kann der Steuerbefehl zum Anbringen des fehlenden Verbindungselements auf Basis der oben beschriebenen Detektionen erfolgen.

In einer weiteren bevorzugten Ausgestaltung der Erfindung umfasst das Verfahren das Bestimmen einer Art bzw. eines Typs des fehlenden Verbindungselements. Das Verfahren umfasst das Erfassen von geometrischer Information an einer erkannten unbesetzten Verbindungselementgegenstelle, zu welchem ein fehlendes Verbindungselement detektiert wurde. Das Verfahren umfasst ferner das Erkennen, mittels eines trainierten Klassifikators, einer Art des fehlenden Verbindungselements auf Basis der geometrischen Informationen der Verbindungselementgegenstellen. Ferner kann hierbei auch weitere Information verwendet werden wie beispielsweise die Richtungsinformation des Verbindungselements (Vektor der Ausrichtung des Verbindungselements wie beispielsweise der Schraube) oder das Ebenenfitting, die Ausdehnung des Clusters oder der erkannten Größe der 2D-Detektion. Ferner umfasst das Verfahren das Ausgeben der Art des fehlenden Verbindungselements auf Basis der Erkennung auf einem Display oder das automatische Korrigieren des digitalen Zwillings auf Basis der Detektion der Art durch Hinzufügen des fehlenden Verbindungselements auf Basis der erkannten Art des fehlenden Verbindungselements. In dieser Variante kann eine Vollautomatisierung mittels des Klassifikators erfolgen. Dadurch kann der (Bild-) Bearbeitungsprozess des 3D-digitalen Zwillings mit dem automatischen Korrekturschritt beschleunigt werden. Der trainierte Klassifikator stellt ein Modell der künstlichen Intelligenz, KI, dar.

In einer weiteren bevorzugten Ausgestaltung der Erfindung umfasst das Verfahren das Ermitteln einer Menge von Fahrzeugteilen des digitalen Zwillings (ohne Verbindungselemente), deren digitale Hüllkörper die erkannte Verbindungelementgegenstelle beinhalten oder sich in einem vorgegebenen Maximalabstand befinden. In einem weiteren Schritt erfolgt das Ermitteln, aus der Vielzahl der ermittelten Fahrzeugteile, einer Untermenge von einem oder mehreren Fahrzeugteilen, welche keine zuvor erkannte Verbindungselementgegenstelle aufweisen (beziehungsweise das Entfernen der Fahrzeugteile, welche zu prüfende Verbindungselementgegenstellen aufweisen). In einem weiteren Schritt erfolgt das Setzen eines digitalen Prüfkörpers mit vorbestimmter Geometrie an die erkannte zu prüfende Verbindungselementgegenstelle. In einem weiteren Schritt erfolgt das Detektieren, dass die erkannte Verbindungselementgegenstelle keine Verbindungselementgegenstelle ist, wenn der digitale Prüfkörper ein Fahrzeugteil aus der identifizierten Untermenge der Fahrzeugteile schneidet.. Auf Basis des Schnitts kann zwischen Kontaktstellen, welche nur als scheinbare Verbindungselementgegenstellen wirken, und tatsächlichen Verbindungsschnittstellen unterschieden werden. Z. B. kann eine Kontaktstelle zwei Löcher beinhalten und ein Kabel, welches durch die Löcher hindurchgeht. D. h., es gibt einige Stellen in Fahrzeugen, welche auf Basis von Merkmalen wie Verbindungselementgegenstellen erscheinen, tatsächlich hingegen keine sind, aber stets Geometrie haben. Somit können entdeckt falsch-positive Verbindungselementgegenstellen ausgeschlossen werden, welche tatsächlich keine Verbindungselementgegenstellen sind. Dadurch wird die Sensitivität der Detektion von fehlenden Verbindungselementen erhöht durch nachgeschaltete geometrische Überprüfung der gefundenen Verbindungselementgegenstelle.

In einer weiteren bevorzugten Ausgestaltung der Erfindung umfasst das Verfahren das Zerlegen eines zu untersuchenden Fahrzeugteils in mehrere Teilsegmente aus den digitalen 3D-Fahrzeuggeometriedaten. Das Verfahren umfasst ferner das Erzeugen, für jedes Teilsegment, eines 2D-Bildes aus einer Raumrichtung je Teilsegment des Fahrzeugteils des digitalen Zwillings durch Rendern der digitalen 3D-Fahrzeuggeometriedaten. Das Verfahren umfasst das Eingeben des 2D-Bildes in das trainierte Detektionsmodells zum Erkennen von unbesetzten Verbindungselementgegenstellen und deren Position im 2D-Bild auf Basis von eingegebenen 2D-Bildern. Das Verfahren umfasst ferner das Detektieren des Fehlens eines Verbindungselements an einer 3D-Lageposition des digitalen Zwillings zum physischen Aufbau des Fahrzeugs auf Basis des Erkennens einer unbesetzten Verbindungselementgegenstelle in dem eingegebenen 2D-Bild des Teilsegments durch das trainierte Detektionsmodell, der digitalen 3D-Fahrzeuggeometriedaten, der Raumrichtung und der erkannten Position im 2D-Bild. Dadurch können auch größere Fahrzeugteile mit guter Auflösung erzielt werden, da durch die Zerlegung der einzelnen Teilsegmente mit höherer Auflösung erfolgen kann als das Gesamtteil.

In einer weiteren bevorzugten Ausgestaltung der Erfindung umfasst das Verfahren das Ausgeben der erkannten fehlenden Verbindungselemente auf einem Display. Das Verfahren umfasst ferner das Erfassen eines Nutzerfeedbacks, umfassend Information über das Bestätigen oder Nicht-Bestätigen über eine Feedback-Schaltfläche einer Benutzerschnittstelle. Ferner umfasst das Verfahren das Anpassen des trainierten Detektionsmodells zur Erkennung von Verbindungselementgegenstellen in Antwort auf das Nutzerfeedback. Somit kann durch Nutzerfeedback ein Nachtrainieren auf Basis der vom Nutzer geprüften Daten erfolgen. Dadurch kann in der Anwendung das trainierte Detektionsmodell verbessert werden. Durch dieses Merkmal wird ein MLOps bereitgestellt. Beispielsweise können Gewichte angepasst werden.

In einer weiteren bevorzugten Ausgestaltung der Erfindung umfasst das Verfahren das Erzeugen einer Graphen-basierten Datenstruktur zum physischen Aufbau des Fahrzeugs, wobei die Graphen-basierte Datenstruktur Fahrzeugteile des digitalen Zwillings als Knoten bzw. Vertices und die von dem trainierten Detektionsmodell erkannten Verbindungselementgegenstellen bzw. Verbindungselemente als Kanten, d. h. zwischen den Knoten liegende Verbindungen, umfasst. Ferner kann die Position von Knoten und Kanten im Graph, bzw. in der Datenstruktur, der ermittelten räumlichen 3D-Lage entsprechen. Mit dieser Datenstruktur lassen sich leicht z. B. Aus-/Zusammenbaureihenfolgen zum physischen Aufbau des Fahrzeugs ableiten und durchführen. Die Graphen-basierte Datenstruktur kann für algorithmische, rechnerische Zwecke etc. verwendet werden. In einer Ausführungsvariante kann ferner diese Graphen-basierte Datenstruktur auch visuell auf einem Display ausgegeben werden.

In einer weiteren bevorzugten Ausgestaltung wird eine Vorrichtung zum Detektieren von fehlenden Verbindungselementen an Verbindungselementgegenstellen an zu untersuchenden digitalen Zwillingen zum physischen Aufbau eines Fahrzeugs beschrieben. Die Vorrichtung umfasst mindestens einen Prozessor und einen operativ damit verbundenen Speicher mit darin abgespeicherten und ausführbaren Instruktionen, wobei der zumindest eine Prozessor dazu eingerichtet ist, die Schritte des Verfahrens durch Ausführen der Instruktionen nach den oberen Ausführungen auszuführen. Die Instruktionen können von einem oder mehreren Programmen, Software und/oder Applikationen genutzt werden.

In einer weiteren Ausgestaltung der Erfindung wird ein Computerprogramm bzw. Computerprogrammprodukt beschrieben, umfassend Instruktionen, die bei der Ausführung des Programms durch einen Computer diesen veranlassen, die oberen Verfahrensschritte auszuführen.

In einer weiteren bevorzugten Ausgestaltung wird ein computerlesbares (Speicher)medium beschrieben, umfassend Befehle, die bei der Ausführung durch einen Computer diesen veranlassen, das oben beschriebene Verfahren durchzuführen.

Die elektronischen oder elektrischen Geräte und/oder andere relevante Geräte oder Komponenten gemäß den hier beschriebenen Ausführungsformen der vorliegenden Erfindung können unter Verwendung jeder geeigneten Hardware, Firmware (z. B. einer anwendungsspezifischen integrierten Schaltung), Software oder einer Kombination daraus implementiert werden. Beispielsweise können die verschiedenen Komponenten dieser Geräte auf einem integrierten Schaltkreis (IC) oder auf separaten IC-Chips untergebracht sein. Darüber hinaus können die verschiedenen Komponenten dieser Vorrichtungen ein Prozess oder Thread sein, der auf einem oder mehreren Prozessoren in einem oder mehreren Computergeräten läuft, Computerprogrammanweisungen ausführt und/oder mit anderen Systemkomponenten interagiert, um die verschiedenen hier beschriebenen Funktionen auszuführen. Die Computerprogrammanweisungen sind in einem Speicher gespeichert, der in einem Computergerät unter Verwendung eines Standardspeichers, wie z. B. eines Arbeitsspeichers (RAM), implementiert werden kann. Die Computerprogrammanweisungen können auch in anderen nicht-übertragbaren, computerlesbaren Medien gespeichert werden, wie z. B. auf einer CD-ROM, einem Flash-Laufwerk oder Ähnlichem.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Verfahren zum Detektieren von fehlenden Verbindungselementen an Verbindungselementgegenstellen von einem zu untersuchenden digitalen Zwilling zum physischen Aufbau eines Fahrzeugs gemäß einer Ausführungsform der Erfindung;
- Figur 2: eine Vorrichtung zum Detektieren von fehlenden Verbindungselementen an Verbindungselementgegenstellen von einem zu untersuchenden digitalen Zwilling zum physischen Aufbau eines Fahrzeugs gemäß einer Ausführungsform der Erfindung;
- Figur 3: eine visuelle Repräsentation eines digitalen Zwillings;
- Figur 4: ein Verfahren zum Erzeugen des trainierten Detektionsmodells gemäß einer Ausführungsform der Erfindung;
- Figur 5: ein Verfahren zum Detektieren von fehlenden Verbindungselementen an Verbindungselementgegenstellen von einem zu untersuchenden digitalen Zwilling zum physischen Aufbau eines Fahrzeugs gemäß den Ausführungsformen der Erfindung;
- Figur 6: ein Verfahren zum Detektieren von fehlenden Verbindungselementen an Verbindungselementgegenstellen von einem zu untersuchenden digitalen Zwilling zum physischen Aufbau eines Fahrzeugs gemäß weiteren Ausführungsformen der Erfindung;
- Figur 7: eine graphische Darstellung des Verfahrens zum Erzeugen von 2D-Bildern gemäß den Ausführungsformen der Erfindung;
- Figur 8: eine graphische Darstellung des Verfahrens zur Detektion fehlender Verbindungselemente gemäß den Ausführungsformen der Erfindung;
- Figur 9: eine visuelle Ausgabe von erkannten fehlenden Verbindungselementen in einem Fahrzeug unter Berücksichtigung aller Komponenten;
- Figur 10: eine Benutzerschnittstelle gemäß einer Ausführungsform der Erfindung;
- Figur 11: eine Darstellung einer Datenstruktur in Form eines Graphen (Baumstruktur) von Fahrzeugkomponenten gemäß einer Ausführungsform der Erfindung;
- Figur 12: ein Verfahren zum Detektieren von falsch-erkannten Verbindungselementgegenstellen gemäß einer Ausführungsform der Erfindung;
- Figur 13: ein Verfahren zum Detektieren von fehlenden Verbindungselementen an Verbindungselementgegenstellen von Fahrzeugkomponenten zum physischen Aufbau eines Fahrzeugs gemäß weiteren Ausführungsformen der Erfindung;
- Figur 14: einen Hüllkörper eine Fahrzeugteils gemäß einer Ausführungsform der Erfindung; und
- Figur 15: einen beispielhaften Schnitt zwischen einem digitalen Prüfkörper und einem Fahrzeugteil gemäß einer Ausführungsform der Erfindung.

Figur 1 zeigt ein Verfahren und Figur 2 eine dazu korrespondierende Vorrichtung 100 zum Detektieren von fehlenden Verbindungselementen an Verbindungselementgegenstellen 22, 32 von einem zu untersuchenden digitalen Zwilling 10. Der digitale Zwilling 10 dient zum physischen Aufbau eines Fahrzeugs. Das Verfahren wird durchgeführt durch die Vorrichtung 100 wie in der Figur 2 beschrieben. Die Vorrichtung 100 umfasst dabei mindestens einen Prozessor 120 und einen operativ damit verbundenen Speicher 110. In dem Speicher 10 sind Instruktionen abgespeichert, welche von dem mindestens einen Prozessor 120 ausgeführt werden, um die Schritte des Verfahrens gemäß den Ausführungsformen der Erfindung auszuführen.

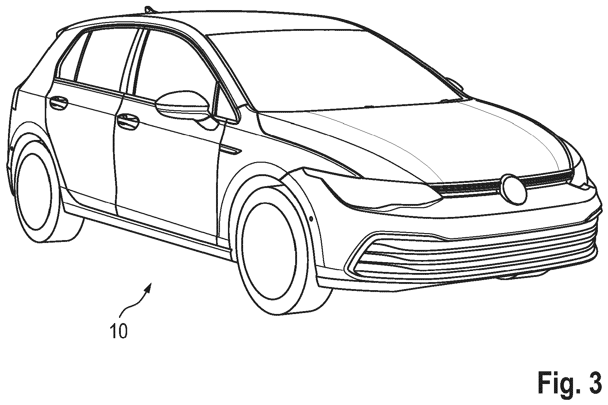

Das Verfahren umfasst das Bereitstellen S100, S100' von digitalen 3D-Fahrzeuggeometriedaten des zu untersuchenden digitalen Zwillings 10 eines Fahrzeugs. Ein rein beispielhafter digitaler Zwilling 10 eines Fahrzeugs ist in der Figur 3 gezeigt. Der digitale Zwilling 10 umfasst eine Vielzahl von Fahrzeugteilen 20, 30 mit jeweiligen Verbindungselementgegenstellen 22, 32 zu anderen Fahrzeugteilen 30. Dies ist in der Figur 2 schematisch dargestellt. Die 3D-Fahrzeuggeometriedaten umfassen 3D-Lage und Form von den Fahrzeugteilen 20, 30 des digitalen Zwillings 10 und/oder einzelnen Punkten davon und stellen so den digitalen Zwilling 10 dar. Die digitalen 3D-Fahrzeuggeometriedaten können abgespeichert vorliegen oder von der Vorrichtung 10 erhalten werden.

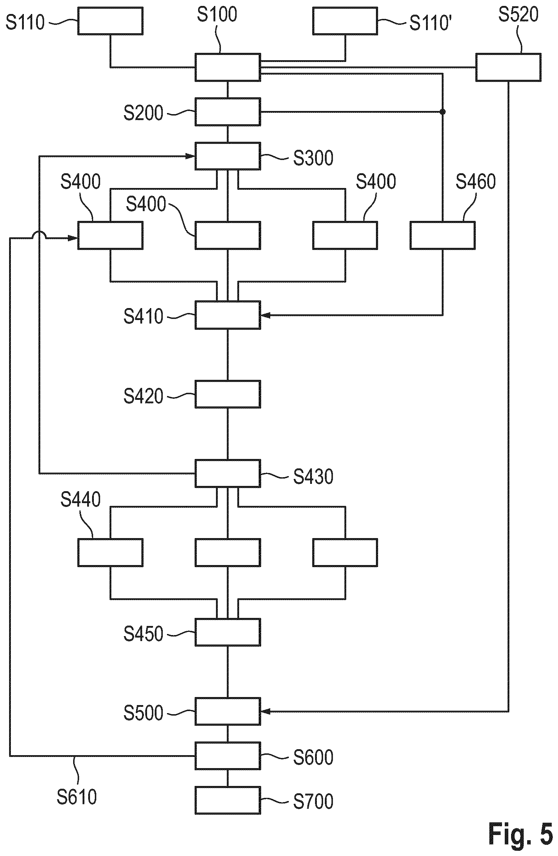

Das Verfahren umfasst ferner das Erzeugen S200, S200', für ein Fahrzeugteil 20, eines 2D-Bildes aus einer (digitalen) Raumrichtung 60 für das Fahrzeugteil 20 des digitalen Zwillings 10 durch Rendern der digitalen 3D-Fahrzeuggeometriedaten. Gemäß den Figuren 5 und 6 können dazu entweder alle vorhandenen Verbindungselemente entfernt (Figur 5) oder beibehalten werden. Für jedes Fahrzeugteil 20 kann ferner eine Vielzahl von 2D-Bildern aus unterschiedlichen (digitalen) Raumrichtungen 60 erzeugt werden, um eine Lagestimmung zu verbessern, wie weiter unten beschrieben.

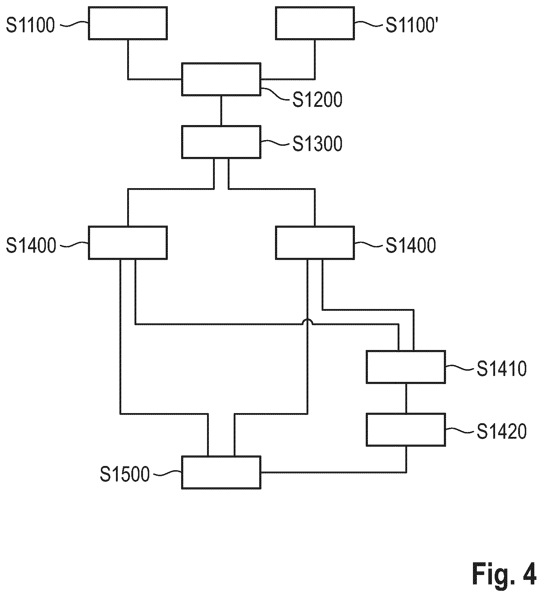

Das Verfahren umfasst ferner das Eingeben S300 des 2D-Bildes in ein trainiertes Detektionsmodell 130 zum Erkennen von unbesetzten Verbindungselementgegenstellen 22' auf Basis der eingegebenen 2D-Bilder. Das trainierte Detektionsmodell 130 kann generiert werden, gemäß des Verfahrens nach Figur 4. Das trainierte Detektionsmodell 130 kann unbesetzte Verbindungselementgegenstellen 22' erkennen und deren Position erfassen. Beispielsweise kann eine Detektion durch eine Rechteckbox im 2D-Bild ausgegeben werden.

Das Verfahren umfasst ferner das Detektieren S500 des Fehlens eines Verbindungselements 40' an einer 3D-Lageposition des digitalen Zwillings 10 zum Aufbau des Fahrzeugs auf Basis des Erkennens S400 eines fehlenden Verbindungselements 40' in dem eingegebenen 2D-Bild durch das trainierte Detektionsmodells 130. Ferner werden dazu die digitalen 3D-Fahrzeuggeometriedaten verwendet sowie die Raumrichtung und die erkannte Position im 2D-Bild. Das Detektieren S500 kann dabei ein vom Erkennen separater Schritt sein, wie in Figur 5 beschreiben, oder direkt aus dem trainierte Detektionsmodells 130 erfolgen.

Die Erfindung hat den Vorteil, dass mittels des trainierten Detektionsmodells durch Bilderkennung aus den ursprünglichen 3D-Daten automatisch und mit hoher Genauigkeit fehlende Verbindungselemente in einem 3D-digitalen Zwillingen detektiert werden können. Durch das Rendern in 2D-Bilder wird für den Erkennungsschritt auf 2D-Bilder transformiert, sodass das trainierte Detektionsmodell 130 die Erkennung auf Basis von 2D-Bildern erzeugt und Detektionen rückprojiziert werden, sodass die Position und Lage im 3D-Zwilling 10 ermittelt wird. Die Detektion kann zur Ausgabe zu einem Display 150 angezeigt werden. In Ausführungen kann auch eine automatische oder teilautomatische Korrektur erfolgen, wie im Folgenden näher beschrieben. Der digitale Zwilling 10, korrigiert oder mit der Information über die fehlenden Verbindungselemente 40', wird zum physischen Aufbau eines Fahrzeugs verwendet. Als Beispiel kann die Vorrichtung 100 auch einen Steuerbefehl zum Aufbau des Fahrzeugs an eine Aktorik/Roboter 200 auf Basis des digitalen Zwillings 10 korrigiert oder mit der Information über die erkannten fehlenden Verbindungselemente 40'übermitteln. Die in Figur 2 beschriebene Vorrichtung 100 wird anhand der folgenden Aufführungsvarianten weiter erläutert.

Figur 4 zeigt ein Verfahren zum Erzeugen des trainierten Detektionsmodells 130 gemäß einer Ausführungsform der Erfindung. Die Figur 4 zeigt dabei einen Trainingsablauf, nach welchem das Detektionsmodell 130 auf die Erkennung und der Position von unbesetzten Verbindungselementgegenstellen 22, 32 trainiert wird, bevor dieses in der Anwendungsphase wie in der obigen Figur 1 oder den Figuren 5 und 6 auf einen auf unbesetzte Verbindungselementgegenstellen 40' zu untersuchenden digitalen Zwilling 10 eingesetzt wird.

In einem ersten Schritt erfolgt das Bereitstellen S1200, als Trainingsdaten, von digitalen 3D-Fahrzeuggeometriedaten eines synthetischen digitalen Zwillings 10 eines Fahrzeugs. Dieser digitale Zwilling 10 umfasst in den 3D-Fahrzeuggeometriedaten eine Vielzahl von Fahrzeugteilen 20 mit jeweiligen Verbindungselementgegenstellen 22, 32 zu anderen Fahrzeugteilen 30. Der Trainingsdatensatz kann somit aus verschiedenen rein synthetischen bzw. virtuellen Daten erhalten werden. Beispielsweise können Datenbanken S1100' von vorherigen Fahrzeugprojekten zur Zusammenstellung des Trainingsdatensatz verwendet werden. In anderen Beispielen können Geometriedesignprogramme wie beispielsweise Catia oder Connect als Datenquelle verwendet werden, um die digitalen 3D-Fahrzeuggeometriedaten eines synthetischen digitalen Zwillings 10 zu erzeugen. Die Trainingsdaten können rein beispielhaft in einem *.jt-Format bereitgestellt werden, wobei die Erfindung nicht darauf beschränkt ist.

In einem weiteren Schritt erfolgt das Erzeugen S1300, für ein Fahrzeugteil 20, eines 2D-Bildes aus einer Raumrichtung 60 je Fahrzeugteil 20 durch Rendern der digitalen 3D-Fahrzeuggeometrietrainingsdaten. Das Rendern kann beispielsweise durch CAD-Programme oder eine Game Engine erfolgen, wobei die Erfindung nicht darauf beschränkt ist.

Bevorzugt werden je Fahrzeugteil in Schritt S1400 eine Vielzahl von 2D-Bildern aus verschiedenen Raumrichtungen 60 je Fahrzeugteil 20, 30 aus den digitalen 3D-Fahrzeuggeometrietrainingsdaten im Renderingprozess erzeugt. Dies ist durch die parallelen Blöcke in Schritt S1400 angezeigt. Dadurch kann mehr Trainingsstatistik erhalten werden.

Diese gerenderten 2D-Bilder werden nun als Input an das zu trainierende Detektionsmodell 130 übergeben und das Detektionsmodell 130 trainiert S1500. Als Referenzen für Loss im Training werden Labels S1420 verwendet. Diese Labels können erkannte und lokalisierte unbesetzte Verbindungselementgegenstellen 22, 32 in den 2D-Bildern sein S1410, welche durch klassische bzw. konventionelle Bildbearbeitungs-Algorithmen ermittelt und lokalisiert wurden. Die Labels für das Training können somit direkt aus den 2D-Bildern abgeleitet und/oder mit geringer Nacharbeit verbessert werden, z. B. durch klassische Bildverarbeitung/Computer-Vision. Beispielsweise können Methoden wie template matching oder 2D-Bilder mit und ohne Verbindungselemente verwendet werden, bei welchen das Detektionsergebnis klar festliegt und von dem trainierenden Detektormodul 130 reproduziert werden soll. Als Labels 1420 können manuell nachjustierte Labels hinzugefügt werden, um z. B. Sonderfälle abzudecken.

In einer bevorzugten Ausführung umfasst das Rendern zum Erzeugen der 2D-Bilder aus den 3D-Fahrzeuggeometriedaten das Entfernen von Verbindungselementen 40 in den Verbindungselementgegenstellen 22, 32. Dadurch werden je 2D-Bild mehr zu erkennende unbesetzte Verbindungselementgegenstellen zum Training bereitgestellt. Die Erfindung ist aber nicht darauf beschränkt und es können auch die Verbindungselemente 40 beibehalten werden.

Als Ergebnis, wenn ein definiertes Genauigkeitskriterium für den Trainingsprozess S1500 erreicht wird, ist somit ein trainiertes Detektionsmodell 130 erzeugt, welches generalisiert ist zur Erkennung von unbesetzten Verbindungselementgegenstellen 22', 32' auf Basis von eingegebenen 2D-Bildern von Fahrzeugteilen 20, 30.

Das so trainierte Detektionsmodell 130 weist keine Realitätslücke auf. Typischerweise tritt bei Verwendung von synthetischen Daten eine sogenannte Realitätslücke, d. h. reality gap, auf. Dies entspricht einem Performanz-Defizit, wenn das trainierte Detektionsmodell 130 auf reale Daten angewendet wird. Da die spätere Anwendung auch in der synthetischen Domaine, d. h. für virtuelle Zwillinge 10 erfolgt, entsteht so keine Realitätslücke. Somit hat das trainierte Detektionsmodell 130 eine hohe Performanz.

Ergebnis ist ein trainiertes Detektionsmodell 130, welches unbesetzte Verbindungselementgegenstellen 22', 32', z. B. Schraublöcher oder Halterstellen erkennt. Diese können beispielsweise als 2D Bounding-Rectangle (Hüllrechteck) im 2D-Bild angezeigt werden.

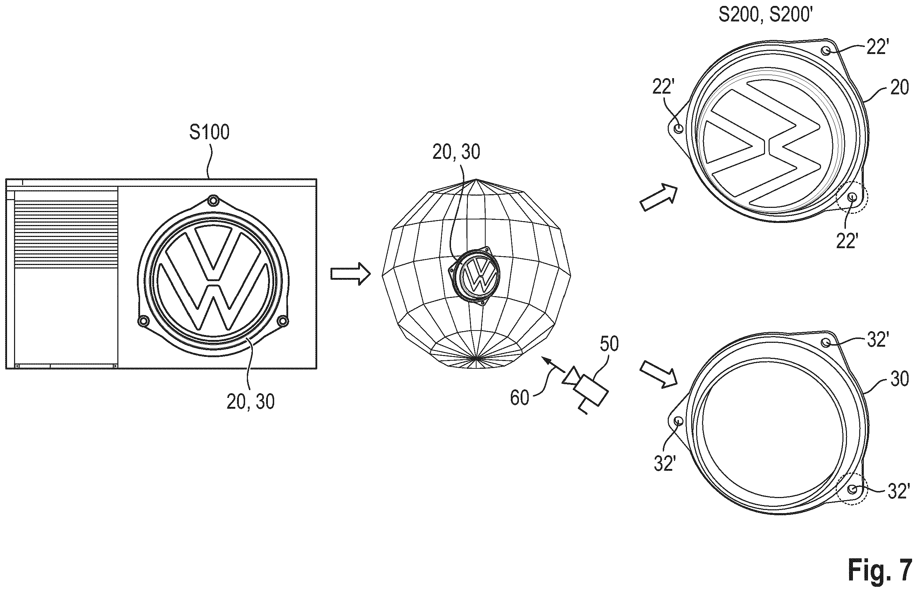

Figur 5 zeigt ferner ein Verfahren zum Detektieren von fehlenden Verbindungselementen 40' an Verbindungselementgegenstellen 22, 32 von einem zu untersuchenden digitalen Zwilling 10 zum physischen Aufbau eines Fahrzeugs gemäß weiteren Ausführungsformen der Erfindung. Das Verfahren wird im Folgenden zusammen mit den Figuren 7 bis 13 beschrieben.

In einem ersten Schritt, wie bereits oben beschreiben, erfolgt das Bereitstellen S100 von digitalen 3D-Fahrzeuggeometriedaten des zu untersuchenden digitalen Zwillings 10. Der digitale Zwilling 10 eines Fahrzeugs umfasst eine Vielzahl von Fahrzeugteilen 20, 30 mit jeweiligen Verbindungselementgegenstellen 22, 32 zu anderen Fahrzeugteilen 30. Diese digitalen 3D-Fahrzeuggeometriedaten, im Vergleich zum Training gemäß Figur 4, entsprechen den Fahrzeugdaten des zu untersuchenden digitalen Zwillings 10. Die 3D-Fahrzeuggeometriedaten können dabei aus verschiedenen Quellen extrahiert werden. Beispielsweise können die 3D-Fahrzeuggeometriedaten aus Datenbanken S110' unter Export der Geometrien erhalten worden sein oder aus Geometriedesigndaten erhalten sein, wobei die Erfindung nicht darauf beschränkt ist. Resultat ist ein zu untersuchender digitaler Zwilling 10 mit digitalen 3D-Fahrzeuggeometriedaten der Fahrzeugteile 20, 30. In der Figur 7 ist beispielhaft ein Logobauteil als ein Beispiel eines Fahrzeugteils 20 gezeigt, welches einen Logokörper 20 und einen Logohalter 30 umfasst. Verbindungselementgegenstellen 22, 32 sind in diesem Fall Löcher und die Verbindungselemente 40 sind Schauben, wobei die Erfindung nicht darauf beschränkt ist.

In dem nächsten Schritt erfolgt das Erzeugen S200, für ein Fahrzeugteil, eines 2D-Bildes aus einer Raumrichtung 60 je Fahrzeugteil 20, 30 des digitalen Zwillings 10. Dies kann auf zwei Arten erfolgen, wie es im Folgenden in der Figur 5 und in der Figur 6 beschrieben wird.

In dieser vorliegenden Ausführungsvariante gemäß Figur 5 wird das 2D-Bild des Fahrzeugteils 20, 30 durch Rendern der digitalen 3D-Fahrzeuggeometriedaten unter Entfernung von Verbindungselementen 40 erzeugt. Das bedeutet, dass das 2D-Bild Verbindungselementgegenstellen 22, 32 aber keine Verbindungselemente aufweist. In der Figur 7 ist dies an dem Beispiel des Logobauteils als ein Fahrzeugteil 20 gezeigt, welches einen Logokörper 20 und einen Logohalter 30 umfasst. Verbindungselementgegenstellen 22, 32 sind in diesem Fall Löcher und die Verbindungselemente 40 sind Schauben. Diese Daten sind beispielsweise in eine *.jt-Datei und aus Connect/Evie extrahiert worden. Die Erfindung ist jedoch nicht auf dieses Beispiel beschränkt, siehe auch das Training für die Erkennung von unbesetzten Verbindungselementgegenstellen 22', 32'.

Zur Illustration des Renderns ist in Figur 7 eine virtuelle Kamera 50 als Beispiel einer geeignet gewählten Raumrichtung 60 dargestellt, von welchem ein 2D-Bild aus den 3D-Fahrzeuggeometriedaten des Logokörper 20 und einen Logohalter 30 generiert wird. Das 2D-Bild wird in dieser Ausführung so gerendert, dass keine Verbindungselemente in dem 2D-Bild enthalten sind. Die Verbindungselementgegenstellen 22', 32' im gerenderten 2D-Bild sind somit unbesetzt. Eine Alternative hierzu wird in dem Verfahren nach Figur 6 beschrieben, in welcher Verbindungselemente beibehalten werden. Diese Ausführung ist schematisch in der Figur 7 mit dargestellt, indem nur die mit gestricheltem Kreis markierte Verbindungselementgegenstelle 22', 32' unbesetzt ist und alle anderen in diesem Beispiel besetzt wären.

In dem folgenden Schritt erfolgt das Eingeben S300 des 2D-Bildes in das trainierte Detektionsmodell 130 zum Erkennen von unbesetzten Verbindungselementgegenstellen 22' auf Basis von eingegebenen 2D-Bildern.

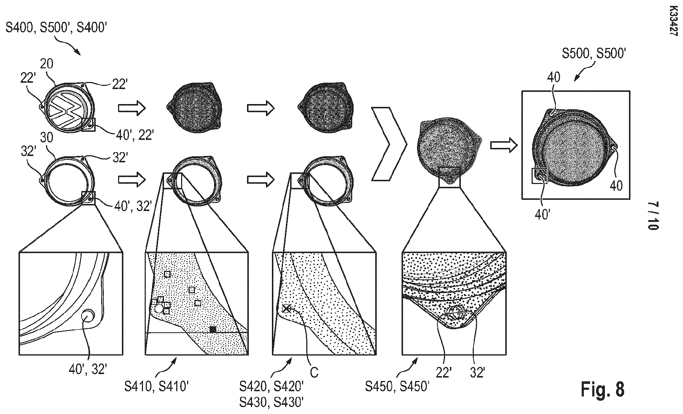

In dem nachfolgenden Schritt erfolgt das Erkennen S400, für jedes Fahrzeugteil 20, 30, unter Verwendung des trainierten Detektionsmodells 130 zum Erkennen von unbesetzten Verbindungselementgegenstellen 22', 32' und deren Position auf Basis von 2D-Bildern, von mindestens einer unbesetzten Verbindungselementgegenstelle 22' in dem 2D-Bild. Das bedeutet, dass das trainierte Detektionsmodell 130 automatisch die unbesetzten Verbindungselementgegenstellen 22', 32' im 2D-Bild erkennt. In dem vorliegenden Fall, im Schritt S400 in Figur 8, werden alle drei unbesetzten Verbindungselementgegenstellen 22', 32' jeweils erkannt.

Bevorzugt werden in Schritt S200 zur besseren Bestimmung der 3D-Lageposition eine Vielzahl von 2D-Bildern aus verschiedenen Raumrichtungen 60 je Fahrzeugteil 20, 30 aus den digitalen 3D-Fahrzeuggeometriedaten erzeugt. In diesem Fall erfolgt das Eingeben S300 der Vielzahl der 2D-Bilder in das trainierte Detektionsmodell 130 zum Erkennen von unbesetzten Verbindungselementgegenstellen 22', 32' auf Basis von der Vielzahl von eingegebenen 2D-Bildern. Dann erfolgt das Erkennen S400, für jedes der 2D-Bilder eines Fahrzeugteiles, von einer unbesetzten Verbindungselementgegenstelle 22', 32' unter Verwendung des trainierten Detektionsmodells 130. Die Vielzahl der 2D-Bilder für verschiedene Raumrichtung 60 ist durch die drei Parallelblöcke zu S400 in Figur 5 dargestellt. Das Erkennungsresultat ist beispielsweise ein Hüllrechteck in jedem 2D-Bild, d. h. ein Bounding-Rectangle.

In einem weiteren Schritt des Verfahrens erfolgt nun das Bestimmen der 3D-Lageposition S410 der mindestens einen erkannten Verbindungselementgegenstelle 22', 32' durch Rückprojektion in den 3D-Raum bzw. in die 3D-Fahrzeuggemetrie unter Verwendung der (ursprünglichen) digitalen 3D-Fahrzeuggeometriedaten, der Raumrichtung 60 und der Erkennungsposition im 2D-Bild (Hüllrechteck).

In einer bevorzugten Ausführung kann dieser Schritt durch Erzeugen einer 3D-Punktwolke S460 aus den digitalen 3D-Fahrzeuggeometriedaten des digitalen Zwillings 10 und der Erkennungsposition im 2D-Bild (Hüllrechteck) erfolgen. Dies kann mittels Sampling der 3D-Punkwolke über die Abmaße der Bounding-Rechtecke der Detektion erfolgen. Outlier (d. h. Ausreißer) können mittels K-Medoids mit Abstandskriterien ausgelassen werden. In diesem Prozess können weitere geometrische Maße wie Ebenennormale, Flächeninhalte, oder maximale Ausmaße ermittelt werden. Dann kann das Bestimmen einer 3D-Lageposition S410, S510' der mindestens erkannten Verbindungselementgegenstelle durch Rückprojektion auf Basis der 3D-Punktwolke, der Raumrichtung und/oder der Erkennungsposition im 2D-Bild (Hüllrechteck) erzielt werden, d. h. durch Sampling der 3D-Punktwolke.

Bei einer Vielzahl von 2D-Bildern je Fahrzeugteil erfolgt das Bestimmen von 3D-Lagepositionen S410 für jedes der erkannten Verbindungselementgegenstellen für jedes 2D-Bild pro Fahrzeugteil durch Rückprojektion auf Basis der digitalen 3D-Fahrzeuggeometriedaten und der Detektionsposition (Hüllrechteck). Diese ermittelten 3D-Lagepositionen sind beispielsweise in der Figur 8 gezeigt, in Schritt S410. Dabei sieht man, dass die 3D-Lagepositionen nicht identisch sind, sondern vielmehr eine Streuung aufweisen. Das liegt daran, dass das Erkennen der Verbindungselementgegenstellen und deren Positionen von dem trainierten Detektionsmodell nicht für jeden Raumwinkel 60 gleichgut geschätzt werden kann, da das 2D-Bild für jeden Raumwinkel 60 unterschiedliche Information enthält.

Daraufhin erfolgt bei einer Mehrzahl von 3D-Lagepositionen ein Clustern S420 der bestimmten 3D-Lagepositionen für ein Fahrzeugteil 20, 30, wie in der Figur 8 angezeigt. Ferner wird eine 3D-Lageposition S430 einer erkannten Verbindungselementgegenstelle als Zentralpunkt C aus jedem Cluster ermittelt. Dies ist in der Figur 8 beim Schritt S420 dargestellt. Ergebnis ist somit eine sehr genaue Lagebeschreibung von einer unbesetzten Verbindungselementgegenstelle 22', 32' in 3D durch den Clusterprozess im Vergleich zu dem Fall, dass nur ein Raumwinkel 60 verwendet wird.

Weiterhin kann zudem ein Filtern S420 von 3D-Lagepositionen von unbesetzten Verbindungselementgegenstellen vor und/oder nach dem Clustern erfolgen, beispielsweise auf Basis von Gewichten aus Konfidenz des Labels und/oder Abstandsinformation, um Ausreißer (Outliner) zu entfernen. Dadurch kann die Genauigkeit der Bestimmung der 3D-Lageposition weiter verbessert werden.

Diese Schritte werden nun wiederholt S440 für alle oder vorbestimmte Fahrzeugkomponenten 20, 30 des digitalen Zwillings 10. Somit werden Lagebestimmungen von unbesetzten Verbindungselementgegenstellen 22', 32' für die verschiedenen Fahrzeugkomponenten nacheinander ermittelt, wie bereits oben beschrieben. Das Ergebnis sind sehr genaue Lagebeschreibung von potentiellen Verbindungselementgegenstellen in 3D für die Vielzahl von Fahrzeugkomponenten 20, 30.

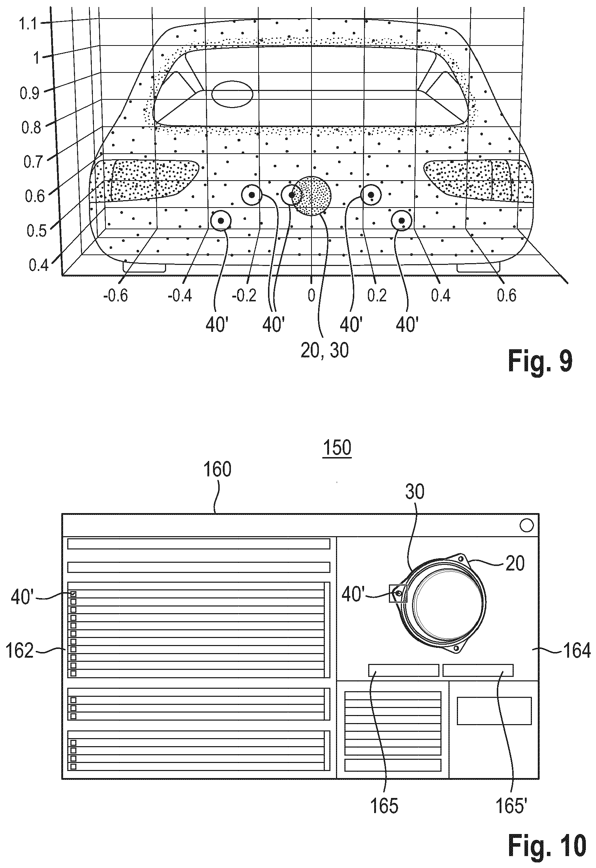

In dem nächsten Schritt erfolgt das digitale Zusammenführen S450 von den verschiedenen Fahrzeugteilen 20, 30 des digitalen Zwillings 10 unter Verwendung der digitalen 3D-Fahrzeuggeometriedaten. Das digitale Zusammenführen von verschiedenen Fahrzeugteilen kann dabei insbesondere auf Basis der 3D-Lageposition der mindestens einen erkannten unbesetzten Verbindungselementgegenstelle durch Paare bzw. Paarbildung von unbesetzten Verbindungselementgegenstellen verschiedener Fahrzeugteile erfolgen und diese gegenüberliegend zusammengeführt werden. Dabei können entsprechende Abstandskriterien herangezogen werden. Ein solcher Schritt ist für das Beispiel des Logoobjekts im Schritt S450 in der Figur 8 gezeigt, wo sich die Verbindungselementgegenstellen 22', 32' gegenüberliegen. Ein digitales Zusammenführen S450 alle Fahrzeugteile 20, 30 ist rein beispielhaft in der Figur 9 gezeigt.

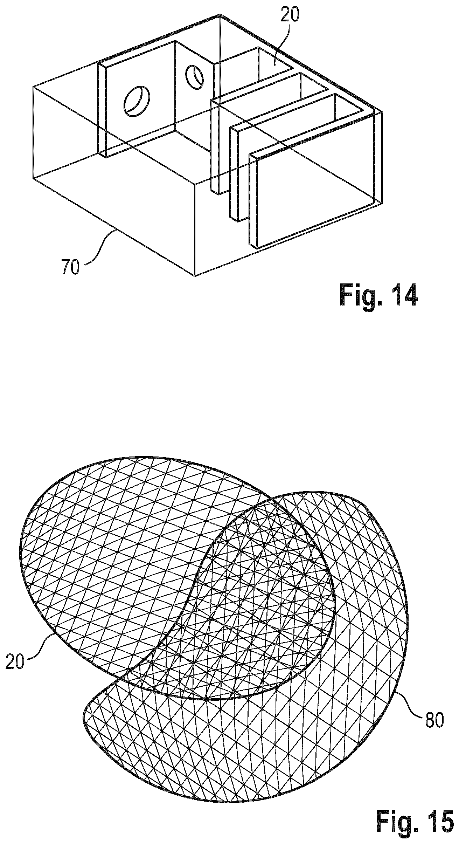

In einem weiteren Schritt erfolgt nun das Detektieren S500 des Fehlens eines Verbindungselements 40' an der Verbindungselementgegenstelle 22', 32' auf Basis eines Schnittabgleichs mit einem digitalen Prüfkörper (z.B. digitaler Hüllkörper 70) an der Verbindungselementgegenstelle 22', 32'. Ein beispielhafter digitaler Hüllkörper 70, hier für ein Fahrzeugteil 20, ist beispielsweise in der Figur 14 zur reinen Illustration gezeigt.

Da in dieser Ausführungsvariante die Verbindungselemente bei Rendering der 2D Bilder entfernt wurden, werden somit im Allgemeinen alle Verbindungselementgegenstellen 22', 32' automatisch entdeckt. Daher muss nun geprüft werden, ob an den detektierten Verbindungselementgegenstellen 22', 32' Geometrie in den 3D-Fahrzeuggeometriedaten des Zwilling 10 vorhanden war. D. h., um eine Entscheidung darüber zu treffen, ob diese durch ein Verbindungselement 40 wie eine Schraube oder Ähnliches besetzt sind, kann gemäß der Erfindung eine Schnittkontrolle erfolgen.

Dazu kann bevorzugt der Schritt des Erzeugens S520 von digitalen Hüllkörpern 70, z. B. Bounding-Boxen, von Verbindungselementen 40 der Fahrzeugteile 20, 30 des digitalen Zwillings 10 aus den digitalen 3D-Fahrzeuggeometriedaten erfolgen. Dies kann aus dem ursprünglichen digitalen Zwilling 10 bzw. den digitalen 3D-Fahrzeuggeometriedaten vor dem Erzeugen S200 der 2D-Bilder wie angezeigt in Figur 5 erfolgen.

Es folgt somit das Detektieren S500 des Fehlens eines Verbindungselements 40' an der Verbindungselementgegenstelle 22', 32' auf Basis eines Schnittabgleichs des digitalen Hüllkörpers 70 an der erkannten Verbindungselementgegenstelle. Hier kann somit geprüft werden, ob die Verbindungselementgegenstelle innerhalb des Hüllkörpers 70 liegt, z B. durch einen Min-Max-Test. Im Detail wird die Geometrie des Verbindungselements (Schraube, Stopfen, Klipse etc.) des zu untersuchenden digitalen Zwillings 10 verwendet, um davon Hüllkörper 70 zu generieren wie beispielsweise Bounding-Boxen (ein umhüllender Würfel zur schnellen "Schnittkontrolle"). Dadurch erhält man sowohl die räumliche Lage aller vorhandenen Verbindungselemente 40 (Yn) und zudem die räumliche Lage aller erkannten Verbindungselementgegenstellen 20, 30 (Xn) aus den 3D-Geomatriedaten. Durch Schnittabgleich zwischen A) und B) (z. B. liegt Verbindungselementgegenstelle X1 in Bounding-Box Y1) kann ermittelt werden, welche erkannten Verbindungselementgegenstellen 22, 32 bereits durch Verbindungselemente 40 besetzt sind und welche nicht. Somit ergibt sich eine Menge von Punkten die entweder besetzt oder unbesetzt sind. Dies ist beispielsweise in der Figur 8 für das Logoobjekt gezeigt, in welcher das fehlende Verbindungselement 40' detektiert wurde. Bei den unbesetzten Verbindungselementgegenstellen 40' bedeutet das dann, dass an diesem Punkt im Raum ein Loch zwischen zwei Fahrzeugkomponenten besteht beziehungsweise kein Verbindungselement an dieser Verbindungselementgegenstelle 22, 32 vorhanden ist. Somit kann sehr sicher durch diesen Schnittabgleich das Fehlen eines Verbindungselement 40' detektiert werden. Eine Detektion ist beispielsweise in Figur 8 bei S500 gezeigt oder mehrere auch in der Figur 9.

In einem weiteren Schritt des Verfahrens kann das Korrigieren S700 des digitalen Zwillings 10 auf Basis der Detektion S500, S500' eines fehlenden Verbindungselements 40 und durch Hinzufügen des fehlenden Verbindungselements an der ermittelten 3D-Lageposition im digitalen Zwilling 10 erfolgen. Dies kann beispielsweise automatisch erfolgen oder halbautomatisch bei Auswahl der passenden Art des Verbindungselements durch den Nutzer (empfangender Auswahleingabe). Ferner kann auch, entweder zusammen mit der Korrektur oder alternativ dazu, ein Ausgeben von Information über das fehlende Verbindungselement 40' auf einem Display 150 der Vorrichtung 100 erfolgen. Das Ergebnis ist z. B. eine Meldung, an welcher Position Verbindungselemente 40' fehlen, bzw. kann genutzt werden, um den digitalen Zwilling 10 zu korrigieren. Aber auch hier kann eine Teil-Automatisierung durch manuelle Behebung der erkannten Fehlstellen erfolgen, wobei auch eine Voll-Automatisierung denkbar ist, indem das genaue Verbindungselement in den 3D-Fahrzeuggeometrien an den erkannten Verbindungselementgegenstellen 22, 32 platziert und korrigiert wird.

In einer besonderen Ausführung umfasst das Verfahren das Hinzufügen des fehlenden Verbindungselements 40' zum digitalen Zwilling 10 auf Basis einer Ausrichtung der Verbindungselementgegenstelle 22', 32' und/oder geometrischer Information über die Verbindungselementgegenstelle 22', 32'. Das Bestimmen einer Ausrichtung von erkannten gegenüberliegenden Verbindungselementgegenstellen 22', 32' gegenüberliegender Fahrzeugteile kann als Vektor (Direktor) zwischen den ermittelten unbesetzten Verbindungselementgegenstellen beschreiben werden. Die Kenntnis der Ausrichtung kann das Hinzufügen des fehlenden Verbindungselements 40' zum digitalen Zwilling auf Basis der Ausrichtung der Verbindungselementgegenstellen umfassen.

Zu einer verbesserten Automatisierung kann das Verfahren das Bestimmen einer Art S600 eines fehlenden Verbindungselements 40' umfassen. Dies kann durch folgende Schritte erfolgen. Zunächst können geometrische Informationen einer erkannten unbesetzten Verbindungselementgegenstelle 22, 32' bestimmt werden. Ferner erfolgt ein Erkennen, mittels eines trainierten Klassifikators 140, einer Art des fehlenden Verbindungselements 40' auf Basis der geometrischen Informationen der unbesetzten Verbindungselementgegenstelle 22', 32'. Ein solcher trainierter Klassifikator 140 kann entsprechend automatisch passende Verbindungselemente bestimmen. Diese Verbindungselemente und deren Korrespondenz zu Verbindungselementgegenstellen kann aus einer Datenbank aufgerufen werden.

In diesem Fall kann das Korrigieren S700 des digitalen Zwillings 10 auf Basis der Erkennung der Art des fehlenden Verbindungselements 40' erfolgen, sodass das fehlende Verbindungselement 40' durch Hinzufügen an die bestimmte 3D-Lageposition der Verbindungselementgegenstelle 22, 32 im digitalen Zwilling 10 und/oder das Ausgeben von Information über das fehlende Verbindungselement 40' auf einem Display 150 (automatisch) erfolgen.

In der Figur 6 wird ein weiteres Verfahren zum Bearbeiten eines auf fehlende Verbindungselemente an Verbindungselementgegenstellen zu untersuchenden digitalen Zwillings 10 zum physischen Aufbau eines Fahrzeugs gemäß weiteren Ausführungsformen der Erfindung beschrieben. Im Folgenden werden nur die Unterschiede zur Ausführungsform der Figur 5 beschrieben.

In dieser Ausführungsform erfolgt das Erzeugen S200', für ein Fahrzeugteil, eines 2D-Bildes aus einer Raumrichtung je Fahrzeugteil des digitalen Zwillings 10 durch Rendern der digitalen 3D-Fahrzeuggeometriedaten, wobei das 2D-Bild Verbindungselemente 40 und Verbindungselementgegenstellen 22, 32 umfasst. Im Vergleich zu dem Verfahren in der Figur 5 werden somit nicht die Verbindungselemente weggerendert. Daher sind in den gerenderten 2D-Bildern Verbindungselementgegenstellen mit Verbindungselementen besetzt, sofern die Verbindungselemente in dem digitalen Zwilling 10 tatsächlich vorhanden sind. In der Figur 7 sind die Verbindungselemente 40 durch die gestrichelten Kreise dargestellt, welche im Verfahren nach Figur 5 nicht Teil der gerenderten 2D-Bilder sind.

Das Verfahren umfasst ferner das Detektieren S500 des Fehlens eines Verbindungselements 40' an einer 3D-Lageposition des digitalen Zwillings 10 zum physischen Aufbau des Fahrzeugs, wenn das trainierte Detektionsmodell 130 eine unbesetzte Verbindungselementgegenstelle 22' in dem gerenderten 2D-Bild erkennt S400'. Die Detektion fehlender Verbindungselemente erfolgt somit unmittelbar durch das trainierte Detektionsmodel 130. Besetzte Verbindungselementgegenstellen werden von dem Detektionsmodel nicht entdeckt. Daher werden in dem in Figur 8 dargestellten Schritt S500', S400' bereits nur die unbesetzten Verbindungselementgegenstellen 22', 32' in den Fahrzeugteilen erkannt, was durch die quadratische Markierung in Figur 8 angezeigt ist. Dadurch erfolgt eine unmittelbare Detektion S500' der unbesetzten Verbindungselementgegenstellen. Detektion und Erkennen fallen somit zusammen, sodass eine besonders effiziente Detektion geschaffen ist.

Ferner wird dann die 3D-Lageposition der erkannten unbesetzten Verbindungselementgegenstelle 22' durch Rückprojektion unter Verwendung der digitalen 3D-Fahrzeuggeometriedaten, der Raumrichtung und der erkannten Position im 2D-Bild ermittelt. Auch ein Zusammenfügen wie in S450' gezeigt, kann mit den oben beschriebenen Mitteln durchgeführt werden. Dies erfolgt analog zu den Schritten S410' bis S440' in Figur 5.

In dieser Ausführungsform wird der Schnittabgleich nicht mehr benötigt, da alle Verbindungselemente 40, z. B. Schrauben, Stopfen, Klipse etc., bereits während des Rendering des Fahrzeugteils in den Bildern belassen sind. D. h., die Detektion S500' eines fehlenden Verbindungselements 40 erfolgt unmittelbar durch Erkennen S400' durch das Detektionsmodell 130. Für das Logoobjekt sind also bereits in den gerenderten Bildern Verbindungselemente wie Schrauben enthalten. Sind alle Verbindungselemente 40 vorhanden, werden somit durch das trainierte Detektionsmodell 130 keine Löcher bzw. unbesetzte Verbindungselementgegenstellen 22' erkannt. Fehlen jedoch Verbindungselemente 40', werden die unbesetzten Verbindungselementgegenstellen 22' unmittelbar von dem trainierten Detektionsmodell 130 entdeckt, ohne dass es einen Schnittabgleich benötigt. Die entdeckten unbesetzten Verbindungselementgegenstellen 22' an den 3D-Lagepositionen können auf den Bildern detektiert und die Info kann an den Nutzer weitergeleitet werden, wie bereits oben beschrieben. Die Detektion ist im Vergleich zum Verfahren nach Figur 5 vorgezogen und entsteht am Ausgang des trainierten Detektionsmodells 130.

In einer besonderen Ausführungsvariante werden nur die Verbindungselemente gerendert, welche in der Nähe, z. B. in der Bounding-Box oder innerhalb eines Schwellenabstands der Fahrzeugkomponente sind, damit die 2D-Bilder nicht alle Verbindungselemente des Fahrzeugs enthalten.

Die weiteren Schritte, welche im Detail zu der Figur 5 beschrieben werden, ausgenommen der Detektion durch Abgleich, können analog auf die Figur 6 übertragen werden. Auf eine redundante Beschreibung wird daher im Folgenden verzichtet unter Referenz zu der Beschreibung zur Figur 5, welche dieser entnommen werden kann.

In der Figur 10 wird eine Ausführungsform des Ausgebens des Detektionsresultats auf einer Benutzerschnittstelle 160 des Displays 150 beschrieben. In dieser beschriebenen Ausführungsvariante kann der Nutzer vor Korrektur eingreifen. Dabei werden erkannte fehlende Verbindungselemente 40' auf der Benutzerschnittstelle 160 ausgegeben. Dadurch kann beispielsweise eine Rücksprache mit den Gewerken erfolgen. Die Benutzerschnittstelle 160 kann dazu eine Liste 162 mit den fehlenden Verbindungselementen 40' anzeigen und/oder bildhaft darstellen, welche Verbindungselemente 40' fehlen. Beispielsweise können durch Eingabe des Benutzers einzelne Verbindungselemente 40' aus der Liste 162 ausgewählt werden und auf einer Bilddarstellungsfläche 164 mit einem zugehörigen Fahrzeugteil 22, 32, dargestellt werden. Hier wird das Detektionsergebnis aus Figur 10 ausgewählt und dargestellt. In einer weiteren Ausführungsform können während des Fliegens bzw. Durchsuchens des digitalen Zwillings 10 bei einer Teilautomatisierung die Detektionsergebnisse über eine Bilddarstellungsfläche 164 simultan während des Fliegens bzw. Durchsuchens des digitalen Zwillings 10 dargestellt werden.

Die Benutzerschnittstelle 160 kann ferner mindestens eine Feedback-Schaltfläche 165, 165' aufweisen. Darüber kann ein Nutzerfeedback erfasst werden, umfassend Information über das Bestätigen oder Nicht-Bestätigen des Fehlens des Verbindungselements 40' über die mindestens eine Feedback-Schaltfläche 165, 165' der Benutzerschnittstelle 160. D. h., der Nutzer kann die erkannten fehlenden Verbindungselemente durch Betätigung der Feedback-Schaltfläche 165, 165' jeweils bestätigen oder nicht bestätigen. Diese Mensch-Maschine-Interaktion bzw. Information kann genutzt werden, um das trainierte Detektionsmodul 130 anzupassen.

Daher umfasst das Verfahren das Anpassen bzw. Nachtrainieren des trainierten Detektionsmodells 130 zur Erkennung von unbesetzten Verbindungselementgegenstellen auf Basis des erfassten Nutzerfeedbacks. Diese Information kann verwendet werden, um die trainierten Detektionsmodelle 130 (und/oder den trainierten Klassifikator 140) anzupassen bzw. sukzessive zu verbessern, d. h. nachtrainiert werden. Insbesondere kann ein Anpassen von Gewichten des trainierten Detektionsmodells 130 zur Erkennung von Verbindungselementgegenstellen auf Basis des erfassten Nutzerfeedbacks erfolgen, wenn beispielsweise ein fehlendes Verbindungselement nicht vom Nutzer bestätigt wird. Wenn die Bestätigung des Nutzer erfolgt ist, kann eine Korrektur des digitalen Zwillings 10 erfolgen und das fehlende Verbindungselement 40' aufgenommen werden, was einer Teilautomatisierung entspricht. Der Nutzer kann demnach einen Plausibilitätscheck durchführen.

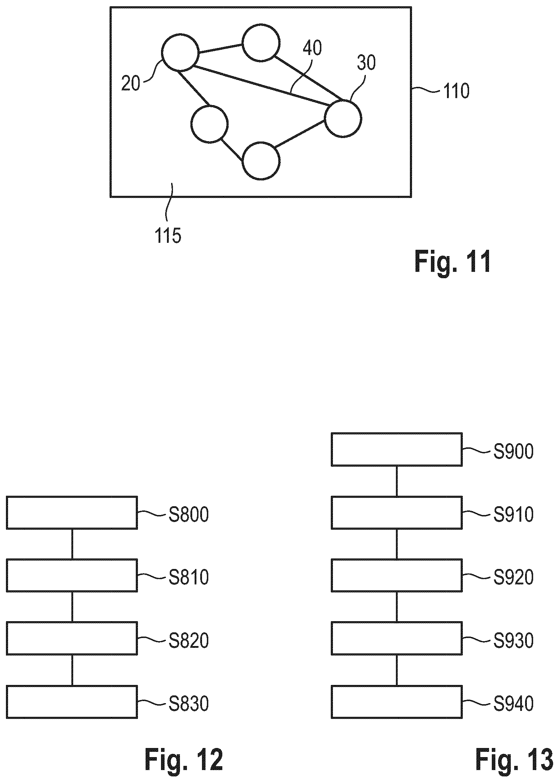

In der Figur 11 ist eine Graphen-basierte Datenstruktur 115 des digitalen Zwillings 10 zum physischen Aufbau des Fahrzeugs gemäß einer Ausführungsform der Erfindung gezeigt. Diese Graphen-basierte Datenstruktur 115 (Baumstruktur) ist in dem Speicher 110 gespeichert. Diese Graphen-basierte Datenstruktur 115 kann für rechnerische Zwecke verwendet werden. Beispielsweise kann auch eine visuelle Ausgabe auf dem Display 150 der Graphen-basierten Datenstruktur 115 erfolgen, wobei die Erfindung nicht darauf beschränkt ist. Die Graphen-basierte Datenstruktur 115 umfasst dabei Fahrzeugteile 20, 30 als Knoten bzw. Vertices und die von dem trainierten Detektionsmodell erkannten Verbindungselementgegenstellen 22, 32 bzw. Verbindungselemente als Kanten, d. h. zwischen den Knoten liegende Verbindungen. Dadurch, dass das Verfahren die Verbindungselementgegenstellen 22, 32 ermittelt, können die Zusammenhänge zwischen den Fahrzeugteilen 20, 30 somit automatisch ermittelt werden. Daher kann leicht eine Graphen-basierte Datenstruktur erzeugt werden, bei welcher Fahrzeugteile 20, 30 z. B. nicht durch eine Vater-Kind-Beziehung aufgebaut werden, sondern z. B. durch ihre räumliche Lage und durch ihre Verbindung zueinander durch die Verbindungselemente 40. Mit dieser Darstellung lassen sich leicht z. B. Aus-/Zusammenbaureihenfolgen zum physischen Aufbau des Fahrzeugs ableiten und durchführen. Diese Erzeugung kann insbesondere mit der Ausführungsform Figur 5 zusammenwirken, da dort alle Verbindungselementgegenstellen 22, 32 ermittelt werden.

In der Figur 12 wird ein Verfahren zum Korrigieren von falsch-erkannten Verbindungselementgegenstellen gemäß einer Ausführungsform der Erfindung beschrieben. In dem oben beschriebenen Verfahren nach Figur 5 oder auch Figur 6 kann es zu einem Erkennen von vermeintlich nicht-besetzten Verbindungselementgegenstellen kommen, welche jedoch vielmehr Kontaktstellen bzw. keine (eigentlichen) Verbindungselementgegenstellen sind. Z. B. kann eine Kontaktstelle zwei Löcher beinhalten und ein Kabel, welches durch die Löcher hindurchgeht. D. h., es gibt einige Stellen in Fahrzeugen, welche auf Basis von Merkmalen wie Verbindungselementgegenstellen 22, 32 erscheinen, aber tatsächlich keine sind, wie z. B. Löcher in zwei Fahrzeugteilen durch welche ein Kabel geführt wird. Diese Kontaktstellen sind jedoch stets durch Geometrie (z. B. ein Kabel) besetzt.

Das Verfahren nach dieser Figur 12 umfasst ferner das Detektieren von falsch-erkannten Verbindungselementgegenstellen gemäß einer Ausführungsform der Erfindung. Das Verfahren ist kombinierbar mit den verschiedenen Ausführungsvarianten, insbesondere nach Figur 5 und 6.

Das Verfahren umfasst das Ermitteln S800 einer Menge von Fahrzeugteilen des digitalen Zwillings 10 (ohne Verbindungselemente), deren digitale Hüllkörper 70 die erkannte Verbindungelementgegenstelle beinhalten oder einen vorgegebenen Maximalabstand davon haben. Es entsteht eine Menge von Fahrzeugteilen, welche die Komplexität für den nachfolgenden Schnitttest reduziert, da nicht alle Fahrzeugteile für den Schnittest berücksichtigt werden müssen.

Ferner umfasst das Verfahren das Ermitteln S810, aus der Vielzahl der ermittelten Fahrzeugteile, einer Untermenge an Fahrzeugteilen, welche keine Verbindungselementgegenstelle aufweisen. Dabei werden diejenigen Fahrzeugteile entfernt, welche bereits bei Identifikation der Verbindungsgegenstelle beteiligt waren, d. h. bei welchen eine zu prüfende Verbindungselementgegenstelle detektiert wurde. Die Menge der Fahrzeugteile wird somit weiter reduziert.

Weiter umfasst das Verfahren das Setzen S820 eines digitalen Prüfkörpers 80 (z. B. Zylinder oder Kugel) bzw. einer Prüfgeometrie mit vorbestimmter Geometrie an die erkannte Verbindungselementgegenstelle. Ein solcher digitaler Prüfkörper 80 ist rein beispielhaft in der Figur 15 illustriert. Weiterhin erfolgt dann das Detektieren S830 (Schnitttest), dass die erkannte Verbindungselementgegenstelle keine Verbindungselementgegenstelle ist, wenn der digitale Prüfkörper 80 ein Fahrzeugteil aus der identifizierten Untermenge der Fahrzeugteile schneidet.

Beim Schnitttest nach S830 kann z. B. die 3D-Punktwolke genutzt werden, um die Performanz für den Schnitttest gering zu halten. D. h., es wird überprüft, ob die Prüfgeometrie des digitalen Prüfobjekts die Geometrie eines der herangezogenen Fahrzeugteile in der Verbindungselementgegenstelle schneidet und/oder auch beinahe schneidet (z. B. Kugel-Prüfgeometrie liegt innerhalb eines sehr dicken Kabels).

Ist dies der Fall und der Schnittabgleich ist positiv, so ist die Verbindungselementgegenstelle bereits besetzt, z. B. durch ein Kabel, weshalb hier kein Verbindungelement (z. B. Schraube) fehlt, sondern vielmehr eine Kontaktstelle vorliegt, welche keine Verbindungselementgegenstelle ist. Ist dies nicht der Fall und der Schnittabgleich ist negativ, so befindet sich keine Geometrie an der Verbindungselementgegenstelle und das Fehlen des Verbindungselements 40' kann bestätigt werden. Die Sensitivität der Detektionen kann somit erhöht werden.

Wenn beim Rendering keine Verbindungselemente in den 2D-Bildern vorliegen, vgl. Ausführungsform nach Figur 5, werden viele Löcher bzw. unbesetzte Verbindungselementgegenstellen gefunden, welche aber z. B. durch einen/ein Schlauch/Kabel besetzt sein können. Um solche scheinbaren Verbindungselementgegenstellen auszuschließen, kann, wie oben beschrieben, im 3D-Raum an diese Stelle ein digitaler Prüfkörper 80, z. B. eine Kugel, gesetzt werden. Beispielsweise kann der digitale Prüfkörper 80 ungefähr dem Durchmesser der Lochöffnung entsprechen. Diese Prüfung erfolgt, wenn alle Geometrien "aktiviert" sind, sodass Schläuche/Kabel alle Löcher besetzen. Die Prüfgeometrie bzw. der Prüfkörper prüft nun, ob diese mit einer anderen Geometrie eines Objekts (Kabel/Schlauch) schneidet, wenn ja, kann es sich nicht mehr um ein Schraubloch handeln. Ferner kann z. B. zusätzlich mittels einer Teilebezeichnung des geschnittenen Objekts mit der die Prüfgeometrie schneidet unterschieden werden bzw. verifiziert werden, ob es sich um einen Schlauch oder Kabel, etc. handelt.

Das oben beschriebene Verfahren wird im Folgenden anhand eines Beispiels näher erläutert, in welchem zwei Fahrzeugteile als Bleche ausgebildet sind mit einem gemeinsamen Loch als zu prüfende Verbindungselementgegenstelle, durch welches ein Schlauch bzw. Rohr führt und somit kein Verbindungselement. Daher soll dieses Loch nicht als Verbindungselementgegenstelle für z. B. Schrauben erkannt werden. Alle drei Teile werden gerendert, um 2D-Bilder zu bekommen. Dies kann mit allen Verbindungselementen oder auch ohne erfolgen, da aber keine in dem Beispiel existieren, sind in diesem Fall auch keine beim Rendern vorhanden. Somit erhält man dann 2D Bilder von beiden Blechen und dem Schlauch. Das trainierte Detektionsmodell erkennt dann die Verbindungsgegenelementstelle bzw. das Loch in jedem Blech, aber keines im Rohr, da hier keines vorhanden ist. Die Detektion ist bereites im Detail in den oberen Ausführungen beschrieben. An dieser Stelle könnte somit fälschlicherweise eine fehlende Schraube detektiert werden.

Wie weiter oben im Allgemeinen beschrieben, wird nun das Verfahren gemäß der Schritte S800 bis S840 auf das Beispiel angewandt. Gemäß des Schritts S800 werden die digitalen Hüllköper aller drei Fahrzeugteile einschließlich des Schlauchs erzeugt und geprüft, ob die ermittelte Verbindungselementgegenstelle jeweils innerhalb der drei Hüllkörper liegt und/oder innerhalb eines vorgegebenen Maximalabstands.

Gemäß des Schritts S810 werden nun diejenigen Fahrzeugteile identifiziert, welche keine Verbindungselementgegenstellen aufweisen. Dabei werden die zwei Bleche aus der ermittelten Menge an Fahrzeugteilen entfernt, da diese zur Bildung der Verbindungselementgegenstelle genutzt wurden. Somit bleibt in diesem Beispiel nur noch der Schlauch übrig.

Gemäß dem Schritt S820 erfolgt nun das Setzen eines digitalen Prüfkörpers 80 (z. B. Kugel in Größe des ermittelten Lochs), siehe beispielsweise in der Figur 15, an die Position der Verbindungselementgegenstelle des digitalen Prüfkörpers 70 (z. B. Kugel in Größe des ermittelten Lochs). Dann wird im Schritt S830 der Schnitt des digitalen Prüfkörpers 80 mit der Untermenge der Fahrzeugteile aus Schritt S810 durchgeführt (in diesem konkreten Fall mit dem Schlauch). Beispielsweise kann das Dreiecksnetz bzw. das Mesh vom Schlauch genommen und das Dreiecksnetz/Mesh von dem digitalen Prüfköper 80 genommen werden. Dabei wird geprüft, ob die Dreiecke sich durchdringen. Ein solcher Schnitt ist beispielsweise in der Figur 15 zur reinen Illustration gezeigt.

Wenn nun im Schritt des Detektierens S830 ein Schnitt detektiert wurde, so ist das Loch bzw. die Verbindungselementgegenstelle durch ein Fahrzeugteil/Schlauch besetzt, welches jedoch kein Verbindungselement ist. Es kann somit mit Sicherheit festgestellt werden, dass dieses Loch kein solches Loch ist, in welchem ein oder mehrere Verbindungselemente fehlen. In einer Erweiterung des Verfahrens und zur weiteren Erläuterung könnte ein (z. B. weiteres) Loch bzw. eine Verbindungsentgegenstelle in den Blechen bzw. Fahrzeugteilen vorhanden sein, in welches eine Schraube bzw. Verbindungselement gehört, dieses aber fehlt. In diesem Fall wird der Schnittest nach S830 keine Schnittgeometrie erkennen mit welcher geschnitten wird. Daher kann in diesem Fall mit Sicherheit detektiert werden, dass das Loch unbesetzt ist und es gibt kein anderes Fahrzeugteil, welches hier hingehört. Es handelt sich dann um ein fehlendes Verbindungselement 40' bzw. um eine fehlenden Schraube.

In der Figur 13 wird ein Verfahren zum Detektieren von fehlenden Verbindungselementen an Verbindungselementgegenstellen von Fahrzeugkomponenten zum physischen Aufbau eines Fahrzeugs gemäß weiteren Ausführungsformen der Erfindung gezeigt. Dieses Verfahren kann mit den Ausführungsformen nach den Figuren 5 und 6 kombiniert werden.

Die Detektion der unbesetzten Verbindungstellen arbeitet auf Basis von Bildinformationen. Dabei spielt jedoch die Auflösung eine wesentliche Rolle für die Erkennung. Fahrzeugteile können jedoch sehr groß werden (z. B. lange Trägerelemente bei LKWs). Dies führt dazu, dass die Auflösung zur Erkennung von fehlenden Verbindungselementgegenstellen 22', 32' nicht ausreichend groß sein kann, um mögliche Verbindungselementgegenstellen im 2D-Bild erkennen zu können (z. B. Schraublöcher werden auf <1 Pixel abgebildet, weil das Verhältnis Bildauflösung zu Größe des Fahrzeugteils zu klein ausfällt).

Um dies zu beheben, kann ein Zerlegen S900 eines zu untersuchendes Fahrzeugteils in mehrere Teilsegmente aus den digitalen 3D-Fahrzeuggeometriedaten (z. B. äquidistantes Gitter, analog einer Voxelisierung) erfolgen. Dabei kann jedes Teilsegment einer Größe entsprechen, welche mit der maximalen Bildauflösung korrespondiert (Verhältnis Pixel zu realen Millimeter). Danach erfolgt für jedes Teilsegment das Erzeugen S910 eines 2D-Bildes aus mindestens einer Raumrichtung 60 je Teilsegment des Fahrzeugteils des digitalen Zwillings 10 durch Rendern der digitalen 3D-Fahrzeuggeometriedaten. Ferner erfolgt ein Eingeben S930 des 2D-Bildes in das trainierte Detektionsmodell 130 zum Erkennen von unbesetzten Verbindungselementgegenstellen auf Basis von eingegebenen 2D-Bildern. Ferner erfolgt der Schritt des Detektierens S950 des Fehlens eines Verbindungselements an einer 3D-Lageposition des digitalen Zwillings 10 zum Aufbau des Fahrzeugs auf Basis des Erkennens S940 eines fehlenden Verbindungselements 40' in dem eingegebenen 2D-Bild des Teilsegments durch das trainierte Detektionsmodell 130, der digitalen 3D-Fahrzeuggeometriedaten, der Raumrichtung und der erkannten Position im 2D-Bild. Das Detektieren erfolgt somit einzeln für die Teilsegmente.

Dadurch können auch fehlende Verbindungselemente in übergroße Fahrzeugteile detektiert werden. Die Teilsegmente können dann in analoger Weise zu der Fahrzeugkomponente digital zusammengeführt werden, wie dies bereits im Schritt Rückprojektion im 3D-Raum bzw. in Clustern und/oder Filtern beschrieben wurde. Es entsteht somit nur eine weitere Ebene, auf der Informationen zusammengeführt werden müssen. So kann die Detektion auch kleinste Stellen bei größeren Objekten identifizieren. Dies kann auch bei der Klassifikation in Schritt S600 erfolgen.

Zusammengefasst wird ein Verfahren zum Detektieren von fehlenden Verbindungselementen 40' an Verbindungselementgegenstellen 22, 32 eines zu untersuchenden digitalen Zwillings 10 zum physischen Aufbau eines Fahrzeugs durchgeführt. Das Verfahren kann sehr genau in 3D-Geometriedaten fehlende Verbindungselemente 40' mittels optischer Erkennung in 2D-Bildern für Verbindungselementgegenstellen 22, 32 in 2D eines digitalen Zwillings gemäß den oberen Ausführungen detektieren, melden und korrigieren mit möglichem automatischen Platzieren.

### Bezugszeichenliste

- S100, S100': Bereitstellen von digitalen 3D-Fahrzeuggeometriedaten
- S200, S200': Erzeugen eines 2D-Bildes
- S300, S300': Eingeben des 2D-Bildes in das Detektionsmodell
- S400, S400': Erkennens eines fehlenden Verbindungselements
- S410, S410': Bestimmen der 3D-Lageposition
- S420, S420': Clustern/Filtern
- S430, S430': Bestimmen der 3D-Lageposition des Zentralpunktes des Clusters
- S450, S450': digitales Zusammenführen
- S460, S460': Erzeugen von 3D-Punktwolke

- S500, S500': Detektieren des Fehlens eines VerbindungselementsS600, S600'Ausgeben der Detektion
- S610, S610': Anpassen des trainierten Detektionsmodells
- S700, S700': Korrigieren des digitalen Zwillings

- S800: Ermitteln einer Menge von Fahrzeugteilen, deren digitale Hüllkörper die Verbindungsgegenelementstelle beinhalten oder innerhalb eines Maximalabstands liegen
- S810: Ermitteln einer Untermenge von Fahrzeugteilen
- S820: Setzen eines digitalen Prüfkörpers an die erkannte Verbindungsstelle
- S830: Detektieren, dass die erkannte Verbindungselementgegenstelle eine Kontaktstelle und keine Verbindungselementgegenstelle ist

- S900: Zerlegen eines Fahrzeugteils
- S910: Erzeugen eines 2D-Bildes für jedes Teilsegment
- S920: Eingeben des 2D-Bildes in das trainierte Detektionsmodell
- S930: Erkennen einer unbesetzten Verbindungselementgegenstelle
- S940: Detektieren des Fehlens eines Verbindungselements

- 10: digitaler Zwilling (eines Fahrzeugs)
- 20: Fahrzeugteil
- 22: Verbindungselementgegenstelle
- 22': unbesetzte Verbindungselementgegenstelle
- 30: Fahrzeugteil
- 32: Verbindungselementgegenstelle
- 32': unbesetzte Verbindungselementgegenstelle

- 40: Verbindungselement
- 40': fehlendes Verbindungselement

- 50: virtuelle Kamera
- 60: Raumrichtung
- 70: digitaler Hüllkörper
- 80: digitaler Prüfkörper

- 100: Vorrichtung
- 110: Speicher
- 115: Graphen-basierte Datenstruktur
- 120: Prozessor
- 130: Detektionsmodell
- 140: Klassifikator
- 150: Display
- 160: Benutzerschnittstelle / User Interface
- 162: Liste
- 164: Bilddarstellungsfläche

- 200: Aktorik/Roboter

## Patentansprüche

1. Computer-implementiertes Verfahren zum Detektieren von fehlenden Verbindungselementen (40') an Verbindungselementgegenstellen (22', 32') eines zu untersuchenden digitalen Zwillings (10) zum physischen Aufbau eines Fahrzeugs, umfassend die folgenden Schritte:
Bereitstellen (S100; S100') von digitalen 3D-Fahrzeuggeometriedaten des zu untersuchenden digitalen Zwillings (10) eines Fahrzeugs umfassend eine Vielzahl von Fahrzeugteilen (20) mit jeweiligen Verbindungselementgegenstellen (22) zu anderen Fahrzeugteilen (30);
Erzeugen (S200, S200'), für ein Fahrzeugteil (20), eines gerenderten 2D-Bildes aus einer Raumrichtung (60) je Fahrzeugteil (20) des zu untersuchenden digitalen Zwillings (10) durch Rendern der digitalen 3D-Fahrzeuggeometriedaten;
Erkennen (S400, S400') von unbesetzten Verbindungselementgegenstellen (22', 32') und deren Position im gerenderten 2D-Bild unter Verwendung eines trainierten Detektionsmodells (130), welches in einer Trainingsphase trainiert ist, auf Basis von 2D-Bildern unbesetzte Verbindungselementgegenstellen (22', 32') zu erkennen;
Detektieren (S500, S500') des Fehlens eines Verbindungselements (40') an einer 3D-Lageposition des zu untersuchenden digitalen Zwillings (10) zum physischen Aufbau des Fahrzeugs auf Basis des Erkennens (S400, S400') einer unbesetzten Verbindungselementgegenstelle (22', 32') und deren Position in dem erzeugten 2D-Bild durch das trainierte Detektionsmodell (130), der digitalen 3D-Fahrzeuggeometriedaten, der Raumrichtung (60) und der erkannten Position im gerenderten 2D-Bild; und
Korrigieren des digitalen Zwillings (10) auf Basis der Detektion eines fehlenden Verbindungselements (40') durch Hinzufügen des fehlenden Verbindungselements an der 3D-Lageposition im digitalen Zwilling (10), und/oder
Ausgeben von Information über ein fehlendes Verbindungselement (40') auf einem Display (150).

2. Verfahren nach Anspruch 1, ferner umfassend:
Erzeugen (S200'), für ein Fahrzeugteil, eines gerenderten 2D-Bildes aus einer Raumrichtung je Fahrzeugteil des zu untersuchenden digitalen Zwillings (10) durch Rendern der digitalen 3D-Fahrzeuggeometriedaten, wobei das erzeugte 2D-Bild Verbindungselemente (40) und Verbindungselementgegenstellen (22, 32) umfasst;
Detektieren (S500) des Fehlens eines Verbindungselements (40') an einer 3D-Lageposition des digitalen Zwillings (10) zum physischen Aufbau des Fahrzeugs, wenn das trainierte Detektionsmodell (130) eine unbesetzte Verbindungselementgegenstelle (22') und deren Position in dem gerenderten 2D-Bild erkennt;
Bestimmen der 3D-Lageposition (S410') der detektierten unbesetzten Verbindungselementgegenstelle (22') durch Rückprojektion unter Verwendung der digitalen 3D-Fahrzeuggeometriedaten, der Raumrichtung und der erkannten Position im gerenderten 2D-Bild (60).

3. Verfahren nach Anspruch 1, ferner umfassend:
Erzeugen (S200), für ein Fahrzeugteil, eines gerenderten 2D-Bildes aus einer Raumrichtung je Fahrzeugteil des zu untersuchenden digitalen Zwillings (10) durch Rendern der digitalen 3D-Fahrzeuggeometriedaten unter Entfernung von Verbindungselementen;
Erkennen (S400), für jedes Fahrzeugteil, unter Verwendung des trainierten Detektionsmodells (130) von mindestens einer unbesetzten Verbindungselementgegenstelle (22') und deren Position in dem erzeugten 2D-Bild;
Bestimmen der 3D-Lageposition (S410) der mindestens einen erkannten unbesetzten Verbindungselementgegenstelle durch Rückprojektion unter Verwendung der digitalen 3D-Fahrzeuggeometriedaten, der Raumrichtung und der erkannten Position im gerenderten 2D-Bild;
digitales Zusammenführen (S450) von den verschiedenen Fahrzeugteilen (20, 30) des digitalen Zwillings (10) unter Verwendung der digitalen 3D-Fahrzeuggeometriedaten; und
Detektieren (S500) des Fehlens eines Verbindungselements (40') an der Verbindungselementgegenstelle (22', 32') auf Basis eines Schnittabgleichs mit einem digitalen Prüfkörper (70) an der erkannten Verbindungselementgegenstelle (22', 32').

4. Verfahren nach Anspruch 3, ferner umfassend:
Erzeugen (S520) von digitalen Hüllkörpern (70) von Verbindungselementen (40) der Fahrzeugteile (20, 30) des digitalen Zwillings (10) aus den digitalen 3D-Fahrzeuggeometriedaten;
Detektieren (S500) des Fehlens eines Verbindungselements (40') an der Verbindungselementgegenstelle (22', 32') auf Basis eines Schnittabgleichs des digitalen Hüllkörpers an der erkannten Verbindungselementgegenstelle (22', 32').

5. Verfahren nach einem der Ansprüche 1 bis 4, ferner umfassend:
Erzeugen (S200, S200') einer Vielzahl von gerenderten 2D-Bildern aus verschiedenen Raumrichtungen je Fahrzeugteil (20, 30) aus den digitalen 3D-Fahrzeuggeometriedaten des zu untersuchenden digitalen Zwillings (10);
Erkennen (S400, S400'), für jedes der gerenderten 2D-Bilder eines Fahrzeugteiles, von einer unbesetzten Verbindungselementgegenstelle (22', 32') und deren Position in dem 2D-Bild unter Verwendung des trainierten Detektionsmodells (130);
Bestimmen von 3D-Lagepositionen (S410, S410') für jedes der erkannten Verbindungselementgegenstellen (22', 32') je Fahrzeugteil durch Rückprojektion auf Basis der digitalen 3D-Fahrzeuggeometriedaten, der Raumrichtung und der erkannten Position im gerenderten 2D-Bild;
Clustern (S420, S420') der bestimmten 3D-Lagepositionen; und
Ermitteln einer 3D-Lageposition (S430, S430') einer erkannten Verbindungselementgegenstelle (22', 32') als Zentralpunkt (C) aus jedem Cluster.

6. Verfahren nach Anspruch 5, ferner umfassend:
Filtern von 3D-Lagepositionen von unbesetzten Verbindungselementgegenstellen (22', 32') vor und/oder nach dem Clustern auf Basis von Gewichten aus Konfidenz des Labels und/oder Abstandsinformation der pro Raumrichtung (60) vorhergesagten 3D-Lagepositionen von Verbindungselementgegenstellen.

7. Verfahren nach einem der Ansprüche 1 bis 6, ferner umfassend:
Erzeugen einer 3D-Punktwolke (S460, S460') aus den digitalen 3D-Fahrzeuggeometriedaten des zu untersuchenden digitalen Zwillings (10);
Bestimmen einer 3D-Lageposition (S410, S410') der mindestens erkannten Verbindungselementgegenstelle durch Rückprojektion auf Basis der 3D-Punktwolke, der Raumrichtung und der erkannten Position.

8. Verfahren nach einem der Ansprüche 1 bis 7, ferner umfassend:
Bestimmen einer Ausrichtung von erkannten gegenüberliegenden Verbindungselementgegenstellen (22, 32) von zusammengeführten verschiedenen Fahrzeugteilen (20, 30) als Vektor zwischen den ermittelten unbesetzten Verbindungselementgegenstellen (22', 32'); und
Hinzufügen des fehlenden Verbindungselements (40') zum digitalen Zwilling (10) auf Basis der Ausrichtung der Verbindungselementgegenstellen (22', 32').

9. Verfahren nach einem der Ansprüche 1 bis 8, ferner umfassend:
Erhalten von geometrischer Informationen einer erkannten unbesetzten Verbindungselementgegenstelle (22', 32');
Erkennen, mittels eines trainierten Klassifikators (140), einer Art des fehlenden Verbindungselements (40') auf Basis der geometrischen Informationen der unbesetzten Verbindungselementgegenstelle (22', 32'); und
Korrigieren (S700) des digitalen Zwillings (10) auf Basis der Erkennung der Art des fehlenden Verbindungselements durch Hinzufügen des fehlenden Verbindungselements (22', 32') an der 3D-Lageposition im digitalen Zwilling (10) und/oder Ausgeben von Information über das fehlende Verbindungselement (40') auf einem Display (150).

10. Verfahren nach einem der Ansprüche 1 bis 9, ferner umfassend:
Ermitteln (S800) einer Menge von Fahrzeugteilen des digitalen Zwillings (10) ohne Verbindungselemente, deren digitale Hüllkörper (70) die erkannte Verbindungselementgegenstelle beinhalten und/oder innerhalb eines Maximalabstands zur erkannten Verbindungselementgegenstelle sind;
Ermitteln (S810), aus der Vielzahl der ermittelten Fahrzeugteile, einer Untermenge an Fahrzeugteilen, welche keine zuvor erkannten Verbindungselementgegenstellen aufweisen;
Setzen (S820) eines digitalen Prüfkörpers (80) mit vorbestimmter Geometrie an die erkannte Verbindungselementgegenstelle; und
Detektieren (S830), dass die erkannte Verbindungselementgegenstelle keine Verbindungselementgegenstelle ist, wenn der digitale Prüfkörper (80) ein Fahrzeugteil aus der identifizierten Untermenge der Fahrzeugteile schneidet.

11. Verfahren nach einem der Ansprüche 1 bis 10, ferner umfassend:
Zerlegen (S900) eines zu untersuchenden Fahrzeugteils in mehrere Teilsegmente aus den digitalen 3D-Fahrzeuggeometriedaten;
Erzeugen (S910), für jedes Teilsegment, eines gerenderten 2D-Bildes aus einer Raumrichtung (60) je Teilsegment des Fahrzeugteils des zu untersuchenden digitalen Zwillings (10) durch Rendern der digitalen 3D-Fahrzeuggeometriedaten;
Erkennen (S930) von unbesetzten Verbindungselementgegenstellen (22', 32') und deren Position im gerenderten 2D-Bild unter Verwendung des trainierten Detektionsmodells (130);
Detektieren (S940) des Fehlens eines Verbindungselements an einer 3D-Lageposition des digitalen Zwillings (10) zum physischen Aufbau des Fahrzeugs auf Basis des Erkennens (S930) einer unbesetzten Verbindungselementgegenstelle (22', 32') in dem gerenderten 2D-Bild des Teilsegments durch das trainierte Detektionsmodell (130), der digitalen 3D-Fahrzeuggeometriedaten, der Raumrichtung und der erkannten Position im 2D-Bild.

12. Verfahren nach einem der Ansprüche 1 bis 11, ferner umfassend:
Ausgeben von erkannten fehlenden Verbindungselementen (40') und/oder unbesetzte Verbindungselementgegenstellen auf einer Benutzerschnittstelle (160);
Erfassen eines Nutzerfeedbacks, umfassend Information über das Bestätigen oder Nichtbestätigen des Fehlens des Verbindungselements (40') im digitalen Zwilling (10) über mindestens eine Feedback-Schaltfläche (165, 165') der Benutzerschnittstelle (160);
Anpassen (S610, S610') des trainierten Detektionsmodells (130) auf Basis des erfassten Nutzerfeedbacks.

13. Verfahren nach einem der Ansprüche 1 bis 12, ferner umfassend:
Ausgeben eines Steuerbefehls an eine Aktorik (200) oder einen Roboter zum Aufbau des Fahrzeugs auf Basis des korrigierten digitalen Zwillings (10) oder mit der Information über die erkannten fehlenden Verbindungselemente (40').

14. Verfahren nach einem der Ansprüche 1 bis 13, ferner umfassend:
Erzeugen einer Graphen-basierten Datenstruktur (115) zum physischen Aufbau des Fahrzeugs, wobei die erzeugte Graphen-basierte Datenstruktur (115) Fahrzeugteile (20) als Knoten und die von dem trainierten Detektionsmodell erkannten Verbindungselementgegenstellen (22, 32) als Kanten der Knoten umfasst.

15. Vorrichtung (100) zum Detektieren von fehlenden Verbindungselementen (40') an Verbindungselementgegenstellen (22, 32) eines zu untersuchenden digitalen Zwillings (10) zum physischen Aufbau eines Fahrzeugs, umfassend:
ein Display (150),
mindestens einen Prozessor (120), welcher eingerichtet ist, die Schritte des Verfahrens nach einem der Ansprüche 1 bis 14 auszuführen.

## Claims

1. Computer-implemented method for detecting missing connecting elements (40') at connecting element counterparts (22', 32') of a digital twin (10) under investigation with respect to the physical construction of a vehicle, comprising the following steps:
providing (S100; S100') digital 3D vehicle geometry data of the digital twin (10) under investigation of a vehicle, comprising a number of vehicle parts (20) with respective connecting element counterparts (22) to other vehicle parts (30);
generating (S200, S200'), for a vehicle part (20), a rendered 2D image from one spatial direction (60) for each vehicle part (20) of the digital twin (10) under investigation by rendering the digital 3D vehicle geometry data;
recognizing (S400, S400') unoccupied connecting element counterparts (22', 32') and their position in the rendered 2D image using a trained detection model (130) which is trained in a training phase to recognize unoccupied connecting element counterparts (22', 32') based on 2D images;
detecting (S500, S500') the absence of a connecting element (40') at a 3D position of the digital twin (10) under investigation with respect to the physical construction of the vehicle on the basis of the recognition (S400, S400') of an unoccupied connecting element counterpart (22', 32') and its position in the generated 2D image by the trained detection model (130), the digital 3D vehicle geometry data, the spatial direction (60) and the recognized position in the rendered 2D image; and
correcting the digital twin (10) on the basis of the detection of a missing connecting element (40') by adding the missing connecting element at the 3D position in the digital twin (10), and/or
issuing information regarding a missing connecting element (40') on a display (150).

2. Method according to claim 1, further comprising:
generating (S200'), for a vehicle part, a rendered 2D image from one spatial direction for each vehicle part of the digital twin (10) under investigation by rendering the digital 3D vehicle geometry data, wherein the generated 2D image comprises connecting elements (40) and connecting element counterparts (22, 32);
detecting (S500) the absence of a connecting element (40') at a 3D position of the digital twin (10) with respect to the physical construction of the vehicle when the trained detection model (130) recognizes an unoccupied connecting element counterpart (22') and its position in the rendered 2D image;
determining the 3D position (S410') of the detected unoccupied connecting element counterpart (22') by back projection using the digital 3D vehicle geometry data, the spatial direction and the recognized position in the rendered 2D image (60).

3. Method according to claim 1, further comprising:
generating (S200), for a vehicle part, a rendered 2D image from one spatial direction for each vehicle part of the digital twin (10) under investigation by rendering the digital 3D vehicle geometry data, with connecting elements being removed;
recognizing (S400), for each vehicle part, using the trained detection model (130), at least one unoccupied connecting element counterpart (22') and its position in the generated 2D image;
determining the 3D position (S410) of the at least one recognized unoccupied connecting element counterpart by back projection using the digital 3D vehicle geometry data, the spatial direction and the recognized position in the rendered 2D image;
digitally merging (S450) the different vehicle parts (20, 30) of the digital twin (10) using the digital 3D vehicle geometry data; and
detecting (S500) the absence of a connecting element (40') at the connecting element counterpart (22', 32') on the basis of a cross-sectional comparison with a digital test piece (70) at the recognized connecting element counterpart (22', 32').

4. Method according to claim 3, further comprising:
generating (S520) digital envelopes (70) of connecting elements (40) of the vehicle parts (20, 30) of the digital twin (10) from the digital 3D vehicle geometry data;
detecting (S500) the absence of a connecting element (40') at the connecting element counterpart (22', 32') on the basis of a cross-sectional comparison of the digital envelope at the recognized connecting element counterpart (22', 32').

5. Method according to any of claims 1 to 4, further comprising:
generating (S200, S200') a number of rendered 2D images from different spatial directions for each vehicle part (20, 30) from the digital 3D vehicle geometry data of the digital twin under investigation (10);
recognizing (S400, S400'), for each of the rendered 2D images of a vehicle part, an unoccupied connecting element counterpart (22', 32') and its position in the 2D image using the trained detection model (130);
determining 3D positions (S410, S410') for each of the recognized connecting element counterparts (22', 32') per vehicle part by back projection on the basis of the digital 3D vehicle geometry data, the spatial direction and the recognized position in the rendered 2D image;
clustering (S420, S420') the determined 3D positions; and
ascertaining a 3D position (S430, S430') of a recognized connecting element counterpart (22', 32') as the central point (C) from each cluster.

6. Method according to claim 5, further comprising:
filtering 3D positions of unoccupied connecting element counterparts (22', 32') before and/or after clustering on the basis of weightings from confidence of the label and/or distance information of the 3D positions of connecting element counterparts predicted per spatial direction (60).

7. Method according to any of claims 1 to 6, further comprising:
generating a 3D point cloud (S460, S460') from the digital 3D vehicle geometry data of the digital twin under investigation (10);
determining a 3D position (S410, S410') of the at least recognized connecting element counterpart by back projection on the basis of the 3D point cloud, the spatial direction and the recognized position.

8. Method according to any of claims 1 to 7, further comprising:
determining the orientation of recognized opposing connecting element counterparts (22, 32) of different merged vehicle parts (20, 30) as a vector between the ascertained unoccupied connecting element counterparts (22', 32'); and
adding the missing connecting element (40') to the digital twin (10) on the basis of the orientation of the connecting element counterparts (22', 32').

9. Method according to any of claims 1 to 8, further comprising:
receiving geometric information from a recognized unoccupied connecting element counterpart (22', 32');
recognizing, using a trained classifier (140), a type of missing connecting element (40') on the basis of the geometric information of the unoccupied connecting element counterpart (22', 32'); and
correcting (S700) the digital twin (10) on the basis of the recognition of the type of missing connecting element by adding the missing connecting element (22', 32') at the 3D position in the digital twin (10) and/or issuing information regarding the missing connecting element (40') on a display (150).

10. Method according to any of claims 1 to 9, further comprising:
ascertaining (S800) a set of vehicle parts of the digital twin (10) without connecting elements of which the digital envelopes (70) contain the recognized connecting element counterpart and/or are within a maximum distance from the recognized connecting element counterpart;
ascertaining (S810), from the number of ascertained vehicle parts, a subset of vehicle parts which do not have any previously recognized connecting element counterparts;
positioning (S820) a digital test piece (80) with predetermined geometry at the recognized connecting element counterpart; and
detecting (S830) that the recognized connecting element counterpart is not a connecting element counterpart when the digital test piece (80) cuts a vehicle part from the identified subset of vehicle parts.

11. Method according to any of claims 1 to 10, further comprising:
splitting (S900) a vehicle part under investigation into a plurality of sub-segments from the digital 3D vehicle geometry data;
generating (S910) a rendered 2D image from one spatial direction (60) for each sub-segment of the vehicle part of the digital twin (10) under investigation by rendering the digital 3D vehicle geometry data;
recognizing (S930) unoccupied connecting element counterparts (22', 32') and their position in the rendered 2D image using the trained detection model (130);
detecting (S940) the absence of a connecting element at a 3D position of the digital twin (10) with respect to the physical construction of the vehicle on the basis of the recognition (S930) of an unoccupied connecting element counterpart (22', 32') in the rendered 2D image of the sub-segment by the trained detection model (130), the digital 3D vehicle geometry data, the spatial direction and the recognized position in the 2D image.

12. Method according to any of claims 1 to 11, further comprising:
issuing recognized missing connecting elements (40') and/or unoccupied connecting element counterparts on a user interface (160);
capturing user feedback, including information regarding confirming or not confirming the absence of the connecting element (40') in the digital twin (10) via at least one feedback button (165, 165') of the user interface (160);
adapting (S610, S610') the trained detection model (130) on the basis of the captured user feedback.

13. Method according to any of claims 1 to 12, further comprising:
issuing a control command to an actuator (200) or a robot to construct the vehicle on the basis of the corrected digital twin (10) or using the information regarding the recognized missing connecting elements (40).

14. Method according to any of claims 1 to 13, further comprising:
generating a graph-based data structure (115) with respect to the physical construction of the vehicle, wherein the generated graph-based data structure (115) comprises vehicle parts (20) as nodes and the connecting element counterparts (22, 32) recognized by the trained detection model as edges of the nodes.

15. Device (100) for detecting missing connecting elements (40') at connecting element counterparts (22, 32) of a digital twin (10) under investigation with respect to the physical construction of a vehicle, comprising:
a display (150),
at least one processor (120), which is configured to perform the steps of the method according to any of claims 1 to 14.

## Revendications

1. Procédé mis en œuvre par ordinateur permettant de détecter des éléments de liaison (40') manquants au niveau de contreparties d'éléments de liaison (22', 32') d'un jumeau numérique (10) à examiner pour la construction physique d'un véhicule, comprenant les étapes suivantes :
fourniture (S100 ; S100') de données géométriques de véhicule 3D numériques du jumeau numérique (10) à examiner d'un véhicule comprenant une pluralité de parties de véhicule (20) comportant des contreparties d'éléments de liaison (22) respectives à d'autres parties de véhicule (30) ;
génération (S200, S200'), pour une partie de véhicule (20), d'une image 2D rendue à partir d'une direction spatiale (60) par partie de véhicule (20) du jumeau numérique (10) à examiner, par rendu des données géométriques de véhicule 3D numériques ;
reconnaissance (S400, S400') de contreparties d'éléments de liaison (22', 32') inoccupées et de leur position dans l'image 2D rendue à l'aide d'un modèle de détection entraîné (130) qui est entraîné dans une phase d'entraînement à reconnaître des contreparties d'éléments de liaison (22', 32') inoccupées sur la base d'images 2D ;
détection (S500, S500') de l'absence d'un élément de liaison (40') à une position d'emplacement 3D du jumeau numérique (10) à examiner pour la construction physique du véhicule sur la base de la reconnaissance (S400, S400') d'une contrepartie d'élément de liaison (22', 32') inoccupée et de sa position dans l'image 2D générée par le modèle de détection entraîné (130), des données géométriques de véhicule 3D numériques, de la direction spatiale (60) et de la position reconnue dans l'image 2D rendue ; et
correction du jumeau numérique (10) sur la base de la détection d'un élément de liaison (40') manquant en ajoutant l'élément de liaison manquant à la position d'emplacement 3D dans le jumeau numérique (10), et/ou
émission d'informations concernant un élément de liaison (40') manquant sur un écran (150).

2. Procédé selon la revendication 1, comprenant en outre :
la génération (S200'), pour une partie de véhicule, d'une image 2D rendue à partir d'une direction spatiale par partie de véhicule du jumeau numérique (10) à examiner en rendant les données géométriques de véhicule 3D numériques, dans lequel l'image 2D générée comprend des éléments de liaison (40) et des contreparties d'éléments de liaison (22, 32) ;
la détection (S500) de l'absence d'un élément de liaison (40') à une position d'emplacement 3D du jumeau numérique (10) pour la construction physique du véhicule, lorsque le modèle de détection entraîné (130) reconnaît une contrepartie d'élément de liaison (22') inoccupée et sa position dans l'image 2D rendue ;
la détermination de la position d'emplacement 3D (S410') de la contrepartie d'élément de liaison (22') inoccupée détectée par rétroprojection à l'aide des données géométriques de véhicule 3D numériques, de la direction spatiale et de la position reconnue dans l'image 2D rendue (60).

3. Procédé selon la revendication 1, comprenant en outre :
la génération (S200), pour une partie de véhicule, d'une image 2D rendue à partir d'une direction spatiale par partie de véhicule du jumeau numérique (10) à examiner, par rendu des données géométriques de véhicule 3D numériques avec suppression des éléments de liaison ;
la reconnaissance (S400), pour chaque partie de véhicule, à l'aide du modèle de détection entraîné (130), d'au moins une contrepartie d'élément de liaison (22') inoccupée et de sa position dans l'image 2D générée ;
la détermination de la position d'emplacement 3D (S410) de l'au moins une contrepartie d'élément de liaison inoccupée reconnue par rétroprojection à l'aide des données géométriques de véhicule 3D numériques, de la direction spatiale et de la position reconnue dans l'image 2D rendue ;
l'assemblage numérique (S450) des différentes parties de véhicule (20, 30) du jumeau numérique (10) à l'aide des données géométriques de véhicule 3D numériques ; et
la détection (S500) de l'absence d'un élément de liaison (40') à la contrepartie d'élément de liaison (22', 32') sur la base d'une comparaison de coupe avec un corps de contrôle numérique (70) au niveau de la contrepartie d'élément de liaison (22', 32') reconnue.

4. Procédé selon la revendication 3, comprenant en outre :
la génération (S520) de corps enveloppants numériques (70) d'éléments de liaison (40) des parties de véhicule (20, 30) du jumeau numérique (10) à partir des données géométriques de véhicule 3D numériques ;
la détection (S500) de l'absence d'un élément de liaison (40') à la contrepartie d'élément de liaison (22', 32') sur la base d'une comparaison de coupe du corps enveloppant numérique au niveau de la contrepartie d'élément de liaison (22', 32') reconnue.

5. Procédé selon l'une des revendications 1 à 4, comprenant en outre :
la génération (S200, S200') d'une pluralité d'images 2D rendues à partir de différentes directions spatiales par partie de véhicule (20, 30) à partir des données géométriques numériques 3D de véhicule du jumeau numérique (10) à examiner ;
la reconnaissance (S400, S400'), pour chacune des images 2D rendues d'une partie de véhicule, d'une contrepartie d'élément de liaison (22', 32') inoccupée et de sa position dans l'image 2D à l'aide du modèle de détection entraîné (130) ;
la détermination de positions d'emplacement 3D (S410, S410') pour chacune des contreparties d'éléments de liaison (22', 32') reconnues par partie de véhicule par rétroprojection sur la base des données géométriques de véhicule 3D numériques, de la direction spatiale et de la position reconnue dans l'image 2D rendue ;
la mise en grappes (S420, S420') des positions d'emplacement 3D déterminées ; et
l'établissement d'une position d'emplacement 3D (S430, S430') d'une contrepartie d'élément de liaison (22', 32') reconnue en tant que point central (C) à partir de chaque grappe.

6. Procédé selon la revendication 5, comprenant en outre :
le filtrage de positions d'emplacement 3D de contreparties d'éléments de liaison (22', 32') inoccupées avant et/ou après la mise en grappes sur la base de poids de confiance de l'étiquette et/ou d'informations de distance des positions d'emplacement 3D de contreparties d'éléments de liaison prédites par direction spatiale (60).

7. Procédé selon l'une des revendications 1 à 6, comprenant en outre :
la génération d'un nuage de points 3D (S460, S460') à partir des données géométriques de véhicule 3D numériques du jumeau numérique (10) à examiner ;
la détermination d'une position d'emplacement 3D (S410, S410') de l'au moins une contrepartie d'élément de liaison reconnue par rétroprojection sur la base du nuage de points 3D, de la direction spatiale et de la position reconnue.

8. Procédé selon l'une des revendications 1 à 7, comprenant en outre :
la détermination d'un alignement de contreparties d'éléments de liaison (22, 32) opposées reconnues de différentes parties de véhicule (20, 30) assemblées en tant que vecteur entre les contreparties d'éléments de liaison (22', 32') inoccupées établies ; et
l'ajout de l'élément de liaison (40') manquant au jumeau numérique (10) sur la base de l'alignement des contreparties d'élément de liaison (22', 32').

9. Procédé selon l'une des revendications 1 à 8, comprenant en outre :
l'obtention d'informations géométriques d'une contrepartie d'élément de liaison (22', 32') inoccupée reconnue ;
la reconnaissance, par le biais d'un classificateur entraîné (140), d'un type d'élément de liaison (40') manquant sur la base des informations géométriques de la contrepartie d'élément de liaison (22', 32') inoccupée ; et
la correction (S700) du jumeau numérique (10) sur la base de la reconnaissance du type d'élément de liaison manquant en ajoutant l'élément de liaison (22', 32') manquant à la position d'emplacement 3D dans le jumeau numérique (10) et/ou en émettant des informations concernant l'élément de liaison (40') manquant sur un écran (150).

10. Procédé selon l'une des revendications 1 à 9, comprenant en outre :
l'établissement (S800) d'un ensemble de parties de véhicule du jumeau numérique (10) sans éléments de liaison, dont les corps enveloppants numériques (70) contiennent la contrepartie d'élément de liaison reconnue et/ou sont à moins d'une distance maximale de la contrepartie d'élément de liaison reconnue ;
l'établissement (S810), à partir de la pluralité de parties de véhicule établies, d'un sous-ensemble de parties de véhicule qui ne présentent pas de contreparties d'éléments de liaison précédemment reconnues ;
la mise en place (S820) d'un corps de contrôle numérique (80) de géométrie prédéterminée sur la contrepartie d'élément de liaison reconnue ; et
la détection (S830) que la contrepartie d'élément de liaison reconnue n'est pas une contrepartie d'élément de liaison lorsque le corps de contrôle numérique (80) coupe une partie de véhicule à partir du sous-ensemble identifié des parties de véhicule.

11. Procédé selon l'une des revendications 1 à 10, comprenant en outre :
la décomposition (S900) d'une partie de véhicule à examiner en plusieurs segments partiels à partir des données géométriques de véhicule 3D numériques ;
la génération (S910), pour chaque segment partiel, d'une image 2D rendue à partir d'une direction spatiale (60) par segment partiel de la partie de véhicule du jumeau numérique (10) à examiner, par rendu des données géométriques de véhicule 3D numériques ;
la reconnaissance (S930) de contreparties d'éléments de liaison (22', 32') inoccupées et de leur position dans l'image 2D rendue à l'aide du modèle de détection entraîné (130) ;
la détection (S940) de l'absence d'un élément de liaison à une position d'emplacement 3D du jumeau numérique (10) pour la construction physique du véhicule sur la base de la reconnaissance (S930) d'une contrepartie d'élément de liaison (22', 32') inoccupée dans l'image 2D rendue du segment partiel par le modèle de détection entraîné (130), des données géométriques de véhicule 3D numériques, de la direction spatiale et de la position reconnue dans l'image 2D.

12. Procédé selon l'une des revendications 1 à 11, comprenant en outre :
l'émission d'éléments de liaison (40') manquants et/ou de contreparties d'éléments de liaison inoccupées reconnues sur une interface utilisateur (160) ;
l'acquisition d'une rétroaction d'utilisateur comprenant des informations concernant la confirmation ou la non-confirmation de l'absence de l'élément de liaison (40') dans le jumeau numérique (10) par l'intermédiaire d'au moins un bouton de rétroaction (165, 165') de l'interface utilisateur (160) ;
l'adaptation (S610, S610') du modèle de détection entraîné (130) sur la base de la rétroaction d'utilisateur acquise.

13. Procédé selon l'une des revendications 1 à 12, comprenant en outre :
l'émission d'un ordre de commande à un actionneur (200) ou à un robot pour construire le véhicule sur la base du jumeau numérique (10) corrigé ou avec les informations concernant les éléments de liaison (40) manquants reconnus.

14. Procédé selon l'une des revendications 1 à 13, comprenant en outre :
la génération d'une structure de données basée sur un graphe (115) pour la construction physique du véhicule, dans lequel la structure de données basée sur un graphe (115) générée comprend des parties de véhicule (20) en tant que nœuds et les contreparties d'éléments de liaison (22, 32) reconnues par le modèle de détection entraîné en tant qu'arêtes des nœuds.

15. Dispositif (100) permettant de détecter des éléments de liaison (40') manquants à des contreparties d'éléments de liaison (22, 32) d'un jumeau numérique (10) à examiner pour la construction physique d'un véhicule, comprenant :
un écran (150),
au moins un processeur (120), lequel est conçu pour exécuter les étapes du procédé selon l'une des revendications 1 à 14.
